# EUROPEAN PATENT APPLICATION

(11) **EP 4 645 988 A1**
(43) Date of publication of application: **05.11.2025**
(21) Application number: 23909811.4
(22) Date of filing: 23.11.2023
(51) Int. Cl.: H04W 72/1263, H04W 72/044, H04W 72/53

(54) **INFORMATION PROCESSING METHOD AND APPARATUS, TRANSMISSION METHOD AND APPARATUS, TERMINAL AND NETWORK SIDE DEVICE**

(30) Priority: 29.12.2022 CN 202211710927
(71) Applicant: Datang Mobile Communications Equipment Co., Ltd., Beijing 100085 (CN)
(72) Inventor: ZHAO, Yali, Beijing 100085 (CN); BERTRAND, Pierre, Beijing 100085 (CN)
(74) Representative: Maiwald GmbH
(86) International application number: PCT/CN2023/133527
(87) International publication number: WO 2024/139879

(57) **Abstract**

The present disclosure provides an information processing method, a transmission method and device, user equipment and network device. The method includes: determining mapping restriction information corresponding to a protocol data unit (PDU) set; in case of receiving a scheduling grant, determining a PDU set allowed to use the scheduling grant based on the mapping restriction information corresponding to the PDU set; or, determining mapping restriction information corresponding to logical channels to which the PDU set belongs based on the mapping restriction information corresponding to the PDU set; in case of receiving the scheduling grant, determining a logical channel allowed to use the scheduling grant based on the mapping restriction information corresponding to the logical channels.

## Description

The present application claims the priority of Chinese Application No. 202211710927.5 filed on December 29, 2022, entitled "information processing method, transmission method, device, user equipment and network device", the disclosure of which are incorporated in its entirety by reference herein.

### TECHNICAL FIELD

The present disclosure relates to the field of communication technologies, and in particular to an information processing method, a transmission method and device, user equipment and network device.

### BACKGROUND

The fifth-generation (5G) mobile communication system supports video services such as extended reality (XR) and cloud gaming. In view of transmission characteristics of XR services, the concept of packet data unit (PDU) set (also known as PDU set) is introduced at the high level.

After the concept of PDU set is introduced, how to perform resource allocation based on the PDU set has become an urgent problem to be solved.

### SUMMARY

An object of embodiments of the present disclosure is to provide an information processing method, a transmission method and device, user equipment and network device, which can solve the problem of how to perform resource allocation base on PDU set.

In order to achieve the above object, in a first aspect, one embodiment of the present disclosure provides an information processing method, including:
determining mapping restriction information corresponding to a protocol data unit (PDU) set;
in case of receiving a scheduling grant, determining a PDU set allowed to use the scheduling grant based on the mapping restriction information corresponding to the PDU set; or,
determining mapping restriction information corresponding to logical channels to which the PDU set belongs based on the mapping restriction information corresponding to the PDU set; in case of receiving the scheduling grant, determining a logical channel allowed to use the scheduling grant based on the mapping restriction information corresponding to the logical channels.

The determining mapping restriction information corresponding to a PDU set, includes:
receiving configuration information sent by a network device; wherein the configuration information includes the mapping restriction information corresponding to the PDU set;
or, when the user equipment is offline, determining the mapping restriction information corresponding to the PDU set based on the preconfigured information.

The receiving configuration information sent by a network device, includes:
in case that the user equipment is in an RRC connected state, receiving the configuration information sent by the network device through a dedicated RRC signaling;
in case that the user equipment is in an RRC idle state or RRC inactive state, receiving the configuration information sent by the network device through system information.

The determining mapping restriction information corresponding to logical channels to which the PDU set belongs based on the mapping restriction information corresponding to the PDU set, includes one of the following:
determining mapping restriction information corresponding to the PDU set in a current buffer of the logical channel to which the PDU set belongs, which is earliest arrived, or has a highest priority, or has a smallest remaining delay budget, as the mapping restriction information corresponding to the logical channel to which the PDU set belongs;
determining an intersection set of mapping restriction information corresponding to earliest arrived N PDU sets, or N PDU sets of highest priority, or N PDU sets with the smallest remaining delay budget, in a current buffer of the logical channel to which the PDU set belongs, as the mapping restriction information corresponding to the logical channel to which the PDU set belongs, wherein N is an integer greater than 1;
determining an intersection set of mapping restriction information corresponding to a logical channel of the user equipment and mapping restriction information corresponding to the PDU set in a current buffer of the logical channel to which the PDU set belongs, which is earliest arrived, or has a highest priority, or has a smallest remaining delay budget, as the mapping restriction information corresponding to the logical channel to which the PDU set belongs;
determining an intersection set of mapping restriction information corresponding to a logical channel of the user equipment and mapping restriction information corresponding to earliest arrived N PDU sets, or N PDU sets of highest priority, or N PDU sets with the smallest remaining delay budget, in a current buffer of the logical channel to which the PDU set belongs, as the mapping restriction information corresponding to the logical channel to which the PDU set belongs, wherein N is an integer greater than 1.

For a Uu interface between the user equipment and the network device, the mapping restriction information includes one or a combination of the following:
highest order modulation and coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical uplink shared channel (PUSCH) duration allowed to be used;
a list of cells allowed to be used;
carrier type allowed to be used;
a list of subcarrier spacing (SCSs) allowed to be used;
maximum SCS allowed to be used.

For a sidelink interface between UEs, the mapping restriction information includes one or a combination of the following:
highest order modulation and coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical uplink shared channel duration (PUSCH duration) allowed to be used;
list of cells allowed to be used;
carrier type allowed to be used;
list of subcarrier spacing (SCSs) allowed to be used;
maximum SCSs allowed to be used.

The determining a PDU set allowed to use the scheduling grant based on the mapping restriction information corresponding to the PDU set, includes:
for Uu interface between the user equipment and the network device, based on the mapping restriction information corresponding to the PDU set, determining a PDU set that satisfies one or more of the following conditions as the PDU set allowed to use the scheduling grant:
highest order modulation and coding MCS level allowed to be used included in the mapping restriction information corresponding to the PDU set is higher than or equal to an MCS level corresponding to the scheduling grant;
a list of configuration grant CGs allowed to be used included in the mapping restriction information corresponding to the PDU set includes a CG index corresponding to the scheduling grant;
configuration grant type allowed to be used included in the mapping restriction information corresponding to the PDU set is the same as a CG type of the scheduling grant;
maximum PUSCH duration allowed to be used included in the mapping restriction information corresponding to the PDU set is greater than or equal to a PUSCH duration corresponding to the scheduling grant;
a list of cells allowed to be used included in the mapping restriction information corresponding to the PDU set includes a cell corresponding to the scheduling grant;
carrier type allowed to be used included in the mapping restriction information corresponding to the PDU set is the same as a carrier type corresponding to the scheduling grant;
a list of subcarrier spacing (SCSs) allowed to be used included in the mapping restriction information corresponding to the PDU set includes an SCS corresponding to the scheduled grant;
maximum SCS allowed to be used included in the mapping restriction information corresponding to the PDU set is greater than or equal to an SCS corresponding to the scheduling grant.

The determining a PDU set allowed to use the scheduling grant based on the mapping restriction information corresponding to the PDU set, includes:
for a sidelink interface between UEs, based on the mapping restriction information corresponding to the PDU set, determining a PDU set that satisfies one or more of the following conditions as the PDU set allowed to use the scheduling grant:
highest order modulation and coding MCS level allowed to be used included in the mapping restriction information corresponding to the PDU set is higher than or equal to an MCS level corresponding to the scheduling grant;
a list of configuration grant CGs allowed to be used included in the mapping restriction information corresponding to the PDU set includes a CG index corresponding to the scheduling grant;
configuration grant type allowed to be used included in the mapping restriction information corresponding to the PDU set is the same as a CG type of the scheduling grant;
maximum PSSCH duration allowed to be used included in the mapping restriction information corresponding to the PDU set is greater than or equal to a PSSCH duration corresponding to the scheduling grant;
a list of subcarrier spacing (SCSs) allowed to be used included in the mapping restriction information corresponding to the PDU set includes an SCS corresponding to the scheduled grant;
maximum SCS allowed to be used included in the mapping restriction information corresponding to the PDU set is greater than or equal to an SCS corresponding to the scheduling grant.

The determining a logical channel allowed to use the scheduling grant based on the mapping restriction information corresponding to the logical channels, includes:
for Uu interface between the user equipment and the network device, based on the mapping restriction information corresponding to the logical channel, determining a logical channel that satisfies one or more of the following conditions as the logical channel allowed to use the scheduling grant:
highest order modulation and coding MCS level allowed to be used included in the mapping restriction information corresponding to the logical channel is higher than or equal to an MCS level corresponding to the scheduling grant;
a list of configuration grant CGs allowed to be used included in the mapping restriction information corresponding to the logical channel includes a CG index corresponding to the scheduling grant;
configuration grant type allowed to be used included in the mapping restriction information corresponding to the logical channel is the same as a CG type of the scheduling grant;
maximum PUSCH duration allowed to be used included in the mapping restriction information corresponding to the logical channel is greater than or equal to a PUSCH duration corresponding to the scheduling grant;
a list of cells allowed to be used included in the mapping restriction information corresponding to the logical channel includes a cell corresponding to the scheduling grant;
carrier type allowed to be used included in the mapping restriction information corresponding to the logical channel is the same as a carrier type corresponding to the scheduling grant;
a list of subcarrier spacing (SCSs) allowed to be used included in the mapping restriction information corresponding to the logical channel includes an SCS corresponding to the scheduled grant;
maximum SCS allowed to be used included in the mapping restriction information corresponding to the logical channel is greater than or equal to an SCS corresponding to the scheduling grant.

The determining a logical channel allowed to use the scheduling grant based on the mapping restriction information corresponding to the logical channels, includes:
for a sidelink interface between UEs, based on the mapping restriction information corresponding to the logical channel, determining a logical channel that satisfies one or more of the following conditions as the logical channel allowed to use the scheduling grant:
highest order modulation and coding MCS level allowed to be used included in the mapping restriction information corresponding to the logical channel is higher than or equal to an MCS level corresponding to the scheduling grant;
a list of configuration grant CGs allowed to be used included in the mapping restriction information corresponding to the logical channel includes a CG index corresponding to the scheduling grant;
configuration grant type allowed to be used included in the mapping restriction information corresponding to the logical channel is the same as a CG type of the scheduling grant;
maximum PSSCH duration allowed to be used included in the mapping restriction information corresponding to the logical channel is greater than or equal to a PSSCH duration corresponding to the scheduling grant;
a list of subcarrier spacing (SCSs) allowed to be used included in the mapping restriction information corresponding to the logical channel includes an SCS corresponding to the scheduled grant;
maximum SCS allowed to be used included in the mapping restriction information corresponding to the logical channel is greater than or equal to an SCS corresponding to the scheduling grant.

After determining a PDU set allowed to use the scheduling grant based on the mapping restriction information corresponding to the PDU set, the method further includes:
performing resource allocation based on the PDU set that allowed to use the scheduling grant.
The performing resource allocation based on the PDU set that allowed to use the scheduling grant, includes:
performing a first round of resource allocation for a first PDU set, wherein the first PDU set is a PDU whose remaining delay budget is lower than a first threshold, in the PDU set that allowed to use the scheduling grant.
The performing a first round of resource allocation for a first PDU set, includes:
in case that there are multiple first PDU sets, performing resource allocation for each of the first PDU sets in the multiple first PDU sets in descending order of priorities of the multiple first PDU sets.

The method further includes:
if there are remaining resources after the first round of resource allocation, performing a second round of resource allocation for PDU sets requiring resources among the PDU sets allowed to use the scheduling grant, excluding the first PDU set, in descending order of priorities of the PDU sets, until resources are exhausted or all PDU sets have been allocated resources;
   or,
if there are remaining resources after the first round of resource allocation, in descending order of priorities of the PDU sets, performing a second round of resource allocation for remaining PDU sets among the PDU sets allowed to use the scheduling grant, excluding the first PDU set, according to PBRs corresponding to the PDU sets;
if there are remaining resources after the second round of resource allocation, in descending order of priorities of the PDU sets, performing resource allocation for remaining data of PDU sets other than the first PDU set in the PDU sets allowed to use the scheduling grant, until the resource is exhausted or all PDU sets have been allocated resources.

The performing resource allocation based on the PDU set that allowed to use the scheduling grant, includes:
performing a first round of resource allocation for PDU sets requiring resources among the PDU sets allowed to use the scheduling grant, in descending order of priorities of the PDU sets; or,
in descending order of priorities of the PDU sets, performing a first round of resource allocation for the PDU sets allowed to use the scheduling grant, based on PBR of each PDU set;
if there are remaining resources after the first round of resource allocation, in descending order of priorities of the PDU sets, performing resource allocation for remaining data of the PDU sets allowed to use the scheduling grant, until the resource is exhausted or all PDU sets have been allocated resources.

After determining a logical channel allowed to use the scheduling grant based on the mapping restriction information corresponding to the logical channels, the method further includes:
performing resource allocation based on logical channels allowed to use the scheduling grant.

The performing resource allocation based on logical channels allowed to use the scheduling grant, includes:
performing resource allocation for a first PDU set, wherein the first PDU set is a PDU set whose remaining delay budget is lower than a first threshold, in the PDU sets allowed to use the scheduling grant;
if there are remaining resources after performing resource allocation for the first PDU set, in descending order of priorities of logical channels, performing a first round of resource allocation or each logical channel allowed to use the scheduling grant according to PBR of the logical channel;
if there are remaining resources after performing the first round of resource allocation for each logical channel allowed to use the scheduling grant, in descending order of priorities of logical channels, performing resource allocation for remaining data in each logical channel allowed to use the scheduling grant, until the resources are exhausted or all data in each logical channel allowed to use the scheduling grant has been allocated resources.

The performing resource allocation based on logical channels allowed to use the scheduling grant, includes:
in descending order of priorities of logical channels, performing a first round of resource allocation for each logical channel allowed to use the scheduling grant, according PBRs of the logical channels;
if there are remaining resources after performing the first round of resource allocation for each logical channel allowed to use the scheduling grant, in descending order of priorities of logical channels, performing resource allocation for remaining data in each logical channel allowed to use the scheduling grant, until the resources are exhausted or all data in each logical channel allowed to use the scheduling grant have been allocated resources.

In a second aspect, one embodiment of the present disclosure further provides an information transmission method applied to a network device, including:
obtaining assistance information;
generating configuration information based on the assistance information, wherein the configuration information includes mapping restriction information corresponding to the PDU set; and
sending the configuration information to a user equipment (UE).

The assistance information includes one or more of the following:
a full set of QoS parameters corresponding to one QoS profile or each PDU set within one QoS flow in UE Uu interface;
a subset of QoS parameters corresponding to one QoS profile or a PDU set within one QoS flow in UE Uu interface;
a full set of QoS parameters corresponding to one QoS profile or a PDU set that may appear within one QoS flow in UE Uu interface;
a subset of QoS parameters corresponding to one QoS profile or a PDU set that may appear within one QoS flow in UE Uu interface.

The obtaining assistance information, includes:
receiving the assistance information reported by the UE;
or, receiving the assistance information from a core network device.

The sending the configuration information to a user equipment (UE), includes:
in case that the UE is in an RRC connected state, sending a special RRC signaling to the UE, wherein the special RRC signaling includes the configuration information;
in case that the UE is in an RRC idle state or an RRC inactive state, sending system information to the UE, wherein the system information includes the configuration information.

For Uu interface between the UE and the network device, the mapping restriction information includes one or a combination of the following:
highest order modulation and coding MCS level allowed to be used;
a list of configuration grants (CGs) allowed to be used, where the CG list includes one or more CG indexes;
whether allow to use configuration grant type 1 (type 1 CG);
whether allow to use configuration grant type 2 (type 2 CG);
maximum physical uplink shared channel (PUSCH) duration allowed to be used;
a list of cells allowed to be used;
carrier type allowed to be used;
a list of subcarrier spacing (SCSs) allowed to be used;
maximum SCSs allowed to be used.

For a sidelink interface between UEs, the mapping restriction information includes one or a combination of the following:
highest order modulation coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical sidelink shared channel (PSSCH) duration allowed to be used;
list of subcarrier spacing (SCSs) allowed to be used;
maximum SCSs allowed to be used.

In a third aspect, one embodiment of the present disclosure further provides a user equipment (UE), comprising: a memory, a transceiver and a processor; wherein the memory is used to store program instructions; the transceiver is used to send and receive data under control of the processor; the processor is used to read the program instructions in the memory and perform the following operations:
determining mapping restriction information corresponding to a protocol data unit (PDU) set;
in case of receiving a scheduling grant, determining a PDU set allowed to use the scheduling grant based on the mapping restriction information corresponding to the PDU set; or,
determining mapping restriction information corresponding to logical channels to which the PDU set belongs based on the mapping restriction information corresponding to the PDU set; in case of receiving the scheduling grant, determining a logical channel allowed to use the scheduling grant based on the mapping restriction information corresponding to the logical channels.

The processor is used to perform:
receiving configuration information sent by a network device; wherein the configuration information includes the mapping restriction information corresponding to the PDU set;
or, when the user equipment is offline, determining the mapping restriction information corresponding to the PDU set based on the preconfigured information.

The processor is used to perform:
in case that the user equipment is in an RRC connected state, receiving the configuration information sent by the network device through a dedicated RRC signaling;
in case that the user equipment is in an RRC idle state or RRC inactive state, receiving the configuration information sent by the network device through system information.

The processor is used to perform:
determining mapping restriction information corresponding to the PDU set in a current buffer of the logical channel to which the PDU set belongs, which is earliest arrived, or has a highest priority, or has a smallest remaining delay budget, as the mapping restriction information corresponding to the logical channel to which the PDU set belongs; or,
determining an intersection set of mapping restriction information corresponding to earliest arrived N PDU sets, or N PDU sets of highest priority, or N PDU sets with the smallest remaining delay budget, in a current buffer of the logical channel to which the PDU set belongs, as the mapping restriction information corresponding to the logical channel to which the PDU set belongs, wherein N is an integer greater than 1; or,
determining an intersection set of mapping restriction information corresponding to a logical channel of the user equipment and mapping restriction information corresponding to the PDU set in a current buffer of the logical channel to which the PDU set belongs, which is earliest arrived, or has a highest priority, or has a smallest remaining delay budget, as the mapping restriction information corresponding to the logical channel to which the PDU set belongs; or,
determining an intersection set of mapping restriction information corresponding to a logical channel of the user equipment and mapping restriction information corresponding to earliest arrived N PDU sets, or N PDU sets of highest priority, or N PDU sets with the smallest remaining delay budget, in a current buffer of the logical channel to which the PDU set belongs, as the mapping restriction information corresponding to the logical channel to which the PDU set belongs, wherein N is an integer greater than 1.

For a Uu interface between the user equipment and the network device, the mapping restriction information includes one or a combination of the following:
highest order modulation and coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical uplink shared channel (PUSCH) duration allowed to be used;
a list of cells allowed to be used;
carrier type allowed to be used;
a list of subcarrier spacing (SCSs) allowed to be used;
maximum SCS allowed to be used.

For a sidelink interface between UEs, the mapping restriction information includes one or a combination of the following:
highest order modulation and coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical uplink shared channel duration (PUSCH duration) allowed to be used;
list of cells allowed to be used;
carrier type allowed to be used;
list of subcarrier spacing (SCSs) allowed to be used;
maximum SCSs allowed to be used.

The processor is used to perform:
for Uu interface between the user equipment and the network device, based on the mapping restriction information corresponding to the PDU set, determining a PDU set that satisfies one or more of the following conditions as the PDU set allowed to use the scheduling grant:
highest order modulation and coding MCS level allowed to be used included in the mapping restriction information corresponding to the PDU set is higher than or equal to an MCS level corresponding to the scheduling grant;
a list of configuration grant CGs allowed to be used included in the mapping restriction information corresponding to the PDU set includes a CG index corresponding to the scheduling grant;
configuration grant type allowed to be used included in the mapping restriction information corresponding to the PDU set is the same as a CG type of the scheduling grant;
maximum PUSCH duration allowed to be used included in the mapping restriction information corresponding to the PDU set is greater than or equal to a PUSCH duration corresponding to the scheduling grant;
a list of cells allowed to be used included in the mapping restriction information corresponding to the PDU set includes a cell corresponding to the scheduling grant;
carrier type allowed to be used included in the mapping restriction information corresponding to the PDU set is the same as a carrier type corresponding to the scheduling grant;
a list of subcarrier spacing (SCSs) allowed to be used included in the mapping restriction information corresponding to the PDU set includes an SCS corresponding to the scheduled grant;
maximum SCS allowed to be used included in the mapping restriction information corresponding to the PDU set is greater than or equal to an SCS corresponding to the scheduling grant.

The processor is used to perform:
for a sidelink interface between UEs, based on the mapping restriction information corresponding to the PDU set, determining a PDU set that satisfies one or more of the following conditions as the PDU set allowed to use the scheduling grant:
highest order modulation and coding MCS level allowed to be used included in the mapping restriction information corresponding to the PDU set is higher than or equal to an MCS level corresponding to the scheduling grant;
a list of configuration grant CGs allowed to be used included in the mapping restriction information corresponding to the PDU set includes a CG index corresponding to the scheduling grant;
configuration grant type allowed to be used included in the mapping restriction information corresponding to the PDU set is the same as a CG type of the scheduling grant;
maximum PSSCH duration allowed to be used included in the mapping restriction information corresponding to the PDU set is greater than or equal to a PSSCH duration corresponding to the scheduling grant;
a list of subcarrier spacing (SCSs) allowed to be used included in the mapping restriction information corresponding to the PDU set includes an SCS corresponding to the scheduled grant;
maximum SCS allowed to be used included in the mapping restriction information corresponding to the PDU set is greater than or equal to an SCS corresponding to the scheduling grant.

The processor is used to perform:
for Uu interface between the user equipment and the network device, based on the mapping restriction information corresponding to the logical channel, determining a logical channel that satisfies one or more of the following conditions as the logical channel allowed to use the scheduling grant:
highest order modulation and coding MCS level allowed to be used included in the mapping restriction information corresponding to the logical channel is higher than or equal to an MCS level corresponding to the scheduling grant;
a list of configuration grant CGs allowed to be used included in the mapping restriction information corresponding to the logical channel includes a CG index corresponding to the scheduling grant;
configuration grant type allowed to be used included in the mapping restriction information corresponding to the logical channel is the same as a CG type of the scheduling grant;
maximum PUSCH duration allowed to be used included in the mapping restriction information corresponding to the logical channel is greater than or equal to a PUSCH duration corresponding to the scheduling grant;
a list of cells allowed to be used included in the mapping restriction information corresponding to the logical channel includes a cell corresponding to the scheduling grant;
carrier type allowed to be used included in the mapping restriction information corresponding to the logical channel is the same as a carrier type corresponding to the scheduling grant;
a list of subcarrier spacing (SCSs) allowed to be used included in the mapping restriction information corresponding to the logical channel includes an SCS corresponding to the scheduled grant;
maximum SCS allowed to be used included in the mapping restriction information corresponding to the logical channel is greater than or equal to an SCS corresponding to the scheduling grant.

The processor is used to perform:
for a sidelink interface between UEs, based on the mapping restriction information corresponding to the logical channel, determining a logical channel that satisfies one or more of the following conditions as the logical channel allowed to use the scheduling grant:
highest order modulation and coding MCS level allowed to be used included in the mapping restriction information corresponding to the logical channel is higher than or equal to an MCS level corresponding to the scheduling grant;
a list of configuration grant CGs allowed to be used included in the mapping restriction information corresponding to the logical channel includes a CG index corresponding to the scheduling grant;
configuration grant type allowed to be used included in the mapping restriction information corresponding to the logical channel is the same as a CG type of the scheduling grant;
maximum PSSCH duration allowed to be used included in the mapping restriction information corresponding to the logical channel is greater than or equal to a PSSCH duration corresponding to the scheduling grant;
a list of subcarrier spacing (SCSs) allowed to be used included in the mapping restriction information corresponding to the logical channel includes an SCS corresponding to the scheduled grant;
maximum SCS allowed to be used included in the mapping restriction information corresponding to the logical channel is greater than or equal to an SCS corresponding to the scheduling grant.

The processor is used to perform:
performing resource allocation based on the PDU set that allowed to use the scheduling grant.

The processor is used to perform:
performing a first round of resource allocation for a first PDU set, wherein the first PDU set is a PDU whose remaining delay budget is lower than a first threshold, in the PDU set that allowed to use the scheduling grant.

The processor is used to perform:
in case that there are multiple first PDU sets, performing resource allocation for each of the first PDU sets in the multiple first PDU sets in descending order of priorities of the multiple first PDU sets.

The processor is used to perform:
if there are remaining resources after the first round of resource allocation, performing a second round of resource allocation for PDU sets requiring resources among the PDU sets allowed to use the scheduling grant, excluding the first PDU set, in descending order of priorities of the PDU sets, until resources are exhausted or all PDU sets have been allocated resources;
   or,
if there are remaining resources after the first round of resource allocation, in descending order of priorities of the PDU sets, performing a second round of resource allocation for remaining PDU sets among the PDU sets allowed to use the scheduling grant, excluding the first PDU set, according to PBRs corresponding to the PDU sets;
if there are remaining resources after the second round of resource allocation, in descending order of priorities of the PDU sets, performing resource allocation for remaining data of PDU sets other than the first PDU set in the PDU sets allowed to use the scheduling grant, until the resource is exhausted or all PDU sets have been allocated resources.

The processor is used to perform:
performing a first round of resource allocation for PDU sets requiring resources among the PDU sets allowed to use the scheduling grant, in descending order of priorities of the PDU sets; or,
in descending order of priorities of the PDU sets, performing a first round of resource allocation for the PDU sets allowed to use the scheduling grant, based on PBR of each PDU set;
if there are remaining resources after the first round of resource allocation, in descending order of priorities of the PDU sets, performing resource allocation for remaining data of the PDU sets allowed to use the scheduling grant, until the resource is exhausted or all PDU sets have been allocated resources.

The processor is used to perform:
performing resource allocation based on logical channels allowed to use the scheduling grant.

The processor is used to perform:
performing resource allocation for a first PDU set, wherein the first PDU set is a PDU set whose remaining delay budget is lower than a first threshold, in the PDU sets allowed to use the scheduling grant;
if there are remaining resources after performing resource allocation for the first PDU set, in descending order of priorities of logical channels, performing a first round of resource allocation or each logical channel allowed to use the scheduling grant according to PBR of the logical channel;
if there are remaining resources after performing the first round of resource allocation for each logical channel allowed to use the scheduling grant, in descending order of priorities of logical channels, performing resource allocation for remaining data in each logical channel allowed to use the scheduling grant, until the resources are exhausted or all data in each logical channel allowed to use the scheduling grant has been allocated resources.

The processor is used to perform:
in descending order of priorities of logical channels, performing a first round of resource allocation for each logical channel allowed to use the scheduling grant, according PBRs of the logical channels;
if there are remaining resources after performing the first round of resource allocation for each logical channel allowed to use the scheduling grant, in descending order of priorities of logical channels, performing resource allocation for remaining data in each logical channel allowed to use the scheduling grant, until the resources are exhausted or all data in each logical channel allowed to use the scheduling grant have been allocated resources.

In a fourth aspect, one embodiment of the present disclosure further provides an information processing device, includign:
a first processing unit used to determine mapping restriction information corresponding to a protocol data unit (PDU) set;
a second processing unit used to, in case of receiving a scheduling grant, determine a PDU set allowed to use the scheduling grant based on the mapping restriction information corresponding to the PDU set; or,
a third processing unit used to determine mapping restriction information corresponding to logical channels to which the PDU set belongs based on the mapping restriction information corresponding to the PDU set; in case of receiving the scheduling grant, determining a logical channel allowed to use the scheduling grant based on the mapping restriction information corresponding to the logical channels.

In a fifth aspect, one embodiment of the present disclosure further provides a network device, including: a memory, a transceiver and a processor; wherein the memory is used to store program instructions; the transceiver is used to send and receive data under control of the processor; the processor is used to read the program instructions in the memory and perform the following operations:
obtaining assistance information;
generating configuration information based on the assistance information, where the configuration information includes mapping restriction information corresponding to the PDU set; and
sending the configuration information to a user equipment (UE).

The assistance information includes one or more of the following:
a full set of QoS parameters corresponding to one QoS profile or each PDU set within one QoS flow in UE Uu interface;
a subset of QoS parameters corresponding to one QoS profile or a PDU set within one QoS flow in UE Uu interface;
a full set of QoS parameters corresponding to one QoS profile or a PDU set that may appear within one QoS flow in UE Uu interface;
a subset of QoS parameters corresponding to one QoS profile or a PDU set that may appear within one QoS flow in UE Uu interface.

The processor is used to perform:
receiving the assistance information reported by the UE;
or, receiving the assistance information from a core network device.

The processor is used to perform:
in case that the UE is in an RRC connected state, sending a special RRC signaling to the UE, wherein the special RRC signaling includes the configuration information;
in case that the UE is in an RRC idle state or an RRC inactive state, sending system information to the UE, wherein the system information includes the configuration information.

For Uu interface between the UE and the network device, the mapping restriction information includes one or a combination of the following:
highest order modulation and coding MCS level allowed to be used;
a list of configuration grants (CGs) allowed to be used, where the CG list includes one or more CG indexes;
whether allow to use configuration grant type 1 (type 1 CG);
whether allow to use configuration grant type 2 (type 2 CG);
maximum physical uplink shared channel (PUSCH) duration allowed to be used;
a list of cells allowed to be used;
carrier type allowed to be used;
a list of subcarrier spacing (SCSs) allowed to be used;
maximum SCSs allowed to be used.

For a sidelink interface between UEs, the mapping restriction information includes one or a combination of the following:
highest order modulation coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical sidelink shared channel (PSSCH) duration allowed to be used;
list of subcarrier spacing (SCSs) allowed to be used;
maximum SCSs allowed to be used.

In a sixth aspect, one embodiment of the present disclosure further provides an information transmission device, including:
an obtaining unit used to obtain assistance information;
a fourth processing unit used to generate configuration information based on the assistance information, wherein the configuration information includes mapping restriction information corresponding to the PDU set; and
a transmitting unit used to send the configuration information to a user equipment (UE).

In order to achieve the above objects, one embodiment of the present disclosure further provides a processor-readable storage medium, including a computer program stored thereon; wherein the computer program is used to cause a processor to perform steps of the information processing method according to the first aspect or to perform steps of the information transmission method according to the second aspect.

The foregoing technical solution of the present disclosure has at least the following beneficial effects.

In the foregoing technical solution of the present disclosure, by determining the mapping restriction information corresponding to the set PDU set; in case of receiving a scheduling grant, determining a PDU set allowed to use the scheduling grant based on the mapping restriction information corresponding to the PDU set; or, determining mapping restriction information corresponding to logical channels to which the PDU set belongs based on the mapping restriction information corresponding to the PDU set; in case of receiving the scheduling grant, determining a logical channel allowed to use the scheduling grant based on the mapping restriction information corresponding to the logical channels. In this way, the subsequent resource allocation for the PDU set can be realized on this basis, and the QoS of the PDU set can be guaranteed, thereby enhancing user experience of the XR service.

### BRIEF DESCRIPTION OF THE DRAWINGS

FIG. 1 a schematic diagram showing data frame structure corresponding to an XR service;
Fig. 2 is a schematic diagram showing mapping relationship between PDU set, QoS flow, DRB, and LCH;
FIG.3 is a schematic diagram of a user-plane protocol stack;
FIG. 4 is a schematic flowchart of an information processing method according to an embodiment of the present disclosure;
FIG. 5 is a schematic flowchart of an information processing method according to an embodiment of the present disclosure;
FIG. 6 is a schematic diagram of a user equipment according to an embodiment of the present disclosure;
FIG. 7 is a schematic diagram showing modules of a user equipment according to an embodiment of the present disclosure;
FIG. 8 is a schematic diagram of a network device according to an embodiment of the present disclosure; and
FIG. 9 is a schematic diagram showing modules of a network device according to an embodiment of the present disclosure.

### DETAILED DESCRIPTION

In the embodiment of the present disclosure, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present disclosure, the term "plurality" refers to two or more than two, and other quantifiers are similar.

The technical solutions in the embodiments of the present disclosure will be clearly and completely described below with reference to the accompanying drawings in the embodiments of the present disclosure. Obviously, the described embodiments are only some embodiments of the present disclosure, rather than all embodiments. Based on the embodiments in the present disclosure, all other embodiments obtained by those of ordinary skill in the art without creative efforts fall within the scope of protection of the present disclosure.

The 5G system introduces XR services, and XR services are divided into the following types:
augmented reality (AR): integrates the real world and the virtual world seamlessly, half-real and half-false;
virtual reality (VR): utilize devices to simulate and generate a virtual world, which is all fake;
mixed reality (MR): contains both real physical entities and virtual information.

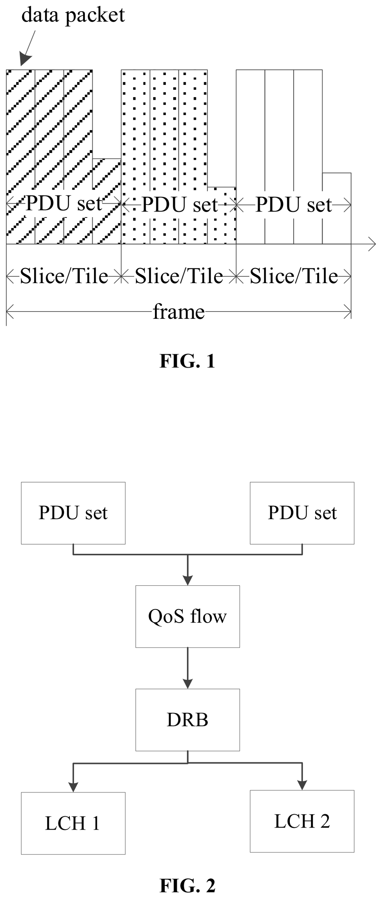

The XR services are modeled based on data frames, and the same data frame can be divided into multiple packet data units (PDUs), as shown in FIG. 1. In other words, the concept of packet data unit (PDU) set (also known as PDU set) has been introduced at the high level of the 5G system.

After the introduction of the concept of PDU set, mapping relationship between PDU set, quality of service (QoS), flow (QoS flow) data radio bearer (DRB) and logical channel (LCH) is shown in FIG. 2.

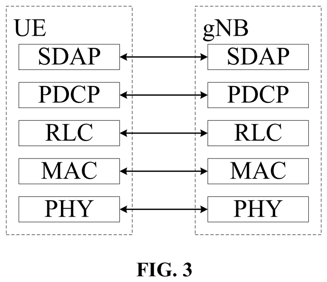

As shown in FIG. 3, the 5G user plane air interface protocol layer includes service data adaptation protocol (SDAP) layer, packet data convergence protocol (PDCP), radio link control (RLC) layer, media access control (MAC) and physical layer.

After a QoS flow arrives at the SDAP, the SDAP performs mapping of the QoS flow to the DRB, thereby forming SDAP PDU (protocol data unit, also referred as packet data unit). The SDAP PDU is PDCP service data unit (SDU). The PDCP layer performs header compression and encryption operations on the PDCP SDU and submits it to the RLC layer. The RLC layer then encapsulates the PDCP SDU into an RLC PDU based on scheduling information of an MAC layer and delivers it to the MAC. The MAC encapsulates the received RLC PDU into a MAC PDU, and then delivers it to the physical layer for transmission.

The principle for SDAP to perform mapping of QoS flow to DRB is as follows:
since QoS attributes of packets in a QoS flow are basically the same, one QoS flow can only be mapped to one DRB.

The transmission of DRB is based on MAC scheduling. In the traditional scheduling mode, uplink scheduling resources allocated by a base station to a user equipment are for one user equipment. In order to ensure fairness between different services in uplink transmission of the user equipment and avoid starvation of some services, logical channel prioritization (LCP) mechanism based on logical channel and prioritized bit rate (PBR) is currently sued.

The LCP mechanism based on logical channel and PBR is as follows:
when obtaining an uplink resource grant (UL grant), in descending order of priorities of logical channels, a user equipment performs a first round of resource allocation for each logical channel with data transmission requirements according to PBR,
if there are remaining resources after the first round of resource allocation is completed, the user equipment performs resource allocation for each logical channel sequentially, in descending order of priorities of current logical channels with data transmission requirements.

After the concept of PDU set is introduced at the high level of the 5G system, how to perform resource allocation based on the PDU set has become an urgent problem to be solved.

In order to solve the above problem, embodiments of the disclosure provide an information processing method, a transmission method and device, a user equipment and a network device. The method and the device are based on the same application concept. Since the principles of the method and the device for solving problems are similar, implementations of the device and the method can refer to each other, and repetitive parts will no longer be elaborated.

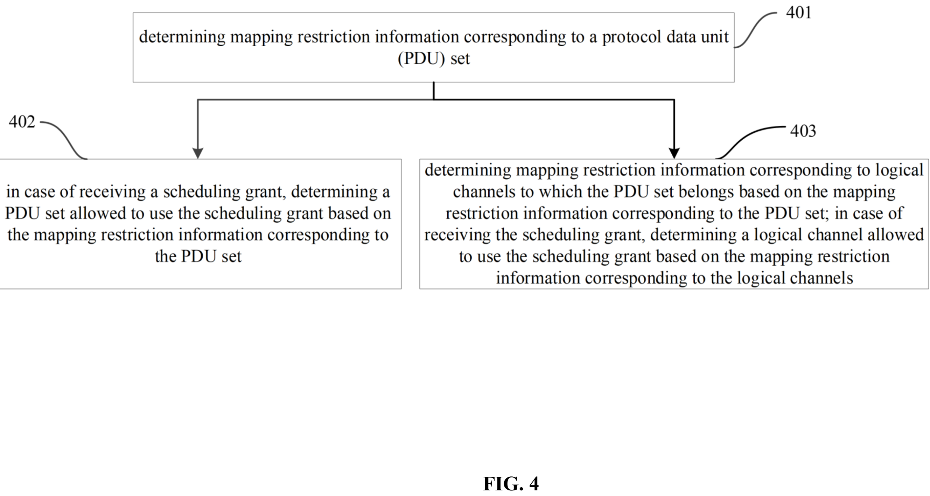

As shown in FIG. 4, it is a schematic flowchart of an information processing method according to an embodiment of the present disclosure, which is applied to a user equipment (UE) and includes:

Step 401: determining mapping restriction information corresponding to a protocol data unit (PDU) set;

This step can be implemented in the following two manners:
Manner 1: receiving configuration information sent by a network device, where the configuration information includes the mapping restriction information corresponding to the PDU set.

Further, the receiving configuration information sent by a network device, may include:
in case that the user equipment is in a radio resource control (RRC) connected state, receiving the configuration information sent by the network device through a dedicated RRC signaling;
or, in case that the user equipment is in an RRC idle state or RRC inactive state, receiving the configuration information sent by the network device through system information.

Manner 2: when the user equipment is in an out of coverage (OOC) state, determining the mapping restriction information corresponding to the PDU set based on preconfigured information.
Step 402: in case of receiving a scheduling grant, determining a PDU set allowed to use the scheduling grant based on the mapping restriction information corresponding to the PDU set; or,
Step 403: determining mapping restriction information corresponding to logical channels to which the PDU set belongs based on the mapping restriction information corresponding to the PDU set; in case of receiving the scheduling grant, determining a logical channel allowed to use the scheduling grant based on the mapping restriction information corresponding to the logical channels.

Based on the information processing method of the embodiment of the present disclosure, QoS of the PDU set can be guaranteed during the subsequent resource allocation of the PDU set, thereby improving user experience of the XR service.

Optionally, for Uu interface between the user equipment and the network device, the mapping restriction information includes one or a combination of the following:
highest order modulation and coding MCS level allowed to be used;
a list of configuration grants (CGs) allowed to be used, where the CG list includes one or more CG indexes;
whether allow to use configuration grant type 1 (type 1 CG);
whether allow to use configuration grant type 2 (type 2 CG);
maximum physical uplink shared channel duration (PUSCH duration) allowed to be used;
a list of cells allowed to be used;
carrier type allowed to be used;
a list of subcarrier spacing (SCSs) allowed to be used;
maximum SCSs allowed to be used.

Optionally, for a sidelink interface between UEs, the mapping restriction information includes one or a combination of the following:
highest order modulation coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical sidelink shared channel (PSSCH) duration allowed to be used;
list of subcarrier spacing (SCSs) allowed to be used;
maximum SCSs allowed to be used.

It is to be noted that the mapping restriction information refers to the mapping restriction information corresponding to the PDU set, or the mapping restriction information corresponding to the logical channel to which the PDU set belongs.

In an optional implementation, the step 402 may specifically include:
for the Uu interface between the user equipment and the network device, based on the mapping restriction information corresponding to the PDU set, determining a PDU set that satisfies one or more of the following conditions as the PDU set allowed to use the scheduling grant:
highest order modulation and coding MCS level allowed to be used included in the mapping restriction information corresponding to the PDU set is higher than or equal to an MCS level corresponding to the scheduling grant;
a list of configuration grant CGs allowed to be used included in the mapping restriction information corresponding to the PDU set includes a CG index corresponding to the scheduling grant;
configuration grant type allowed to be used included in the mapping restriction information corresponding to the PDU set is the same as a CG type of the scheduling grant;
maximum PUSCH duration allowed to be used included in the mapping restriction information corresponding to the PDU set is greater than or equal to a PUSCH duration corresponding to the scheduling grant;
a list of cells allowed to be used included in the mapping restriction information corresponding to the PDU set includes a cell corresponding to the scheduling grant;
carrier type allowed to be used included in the mapping restriction information corresponding to the PDU set is the same as a carrier type corresponding to the scheduling grant;
a list of subcarrier spacing (SCSs) allowed to be used included in the mapping restriction information corresponding to the PDU set includes an SCS corresponding to the scheduled grant;
maximum SCS allowed to be used included in the mapping restriction information corresponding to the PDU set is greater than or equal to an SCS corresponding to the scheduling grant.

It is to be noted that for the PDU set, if mapping restriction is configured, conditions corresponding to the mapping restriction need to be met, and if not, the corresponding conditions do not need to be met.

In another optional implementation, the step 402 may specifically include:
for the sidelink interface between UEs, based on the mapping restriction information corresponding to the PDU set, determining a PDU set that satisfies one or more of the following conditions as the PDU set allowed to use the scheduling grant:
highest order modulation and coding MCS level allowed to be used included in the mapping restriction information corresponding to the PDU set is higher than or equal to an MCS level corresponding to the scheduling grant;
a list of configuration grant CGs allowed to be used included in the mapping restriction information corresponding to the PDU set includes a CG index corresponding to the scheduling grant;
configuration grant type allowed to be used included in the mapping restriction information corresponding to the PDU set is the same as a CG type of the scheduling grant;
maximum PSSCH duration allowed to be used included in the mapping restriction information corresponding to the PDU set is greater than or equal to a PSSCH duration corresponding to the scheduling grant;
a list of subcarrier spacing (SCSs) allowed to be used included in the mapping restriction information corresponding to the PDU set includes an SCS corresponding to the scheduled grant;
maximum SCS allowed to be used included in the mapping restriction information corresponding to the PDU set is greater than or equal to an SCS corresponding to the scheduling grant.

It is to be noted that for the PDU set, if mapping restriction is configured, conditions corresponding to the mapping restriction need to be met, and if not, the corresponding conditions do not need to be met.

In an optional implementation, in the step 403, determining mapping restriction information corresponding to logical channels to which the PDU set belongs based on the mapping restriction information corresponding to the PDU set, can include one of the following:
determining mapping restriction information corresponding to the PDU set in a current buffer of the logical channel to which the PDU set belongs, which is earliest arrived, or has a highest priority, or has a smallest remaining delay budget, as the mapping restriction information corresponding to the logical channel to which the PDU set belongs;
determining an intersection set of mapping restriction information corresponding to earliest arrived N PDU sets, or N PDU sets of highest priorities, or N PDU sets with the smallest remaining delay budget, in a current buffer of the logical channel to which the PDU set belongs, as the mapping restriction information corresponding to the logical channel to which the PDU set belongs, wherein N is an integer greater than 1;
determining an intersection set of mapping restriction information corresponding to a logical channel of the user equipment and mapping restriction information corresponding to the PDU set in a current buffer of the logical channel to which the PDU set belongs, which is earliest arrived, or has a highest priority, or has a smallest remaining delay budget, as the mapping restriction information corresponding to the logical channel to which the PDU set belongs;
determining an intersection set of mapping restriction information corresponding to a logical channel of the user equipment and mapping restriction information corresponding to earliest arrived N PDU sets, or N PDU sets of highest priorities, or N PDU sets with the smallest remaining delay budget, in a current buffer of the logical channel to which the PDU set belongs, as the mapping restriction information corresponding to the logical channel to which the PDU set belongs, wherein N is an integer greater than 1.

In an optional implementation, in the step 403, the determining a logical channel allowed to use the scheduling grant based on the mapping restriction information corresponding to the logical channels, can include one of the following:
for Uu interface between the user equipment and the network device, based on the mapping restriction information corresponding to the logical channel, determining a logical channel that satisfies one or more of the following conditions as the logical channel allowed to use the scheduling grant:
highest order modulation and coding MCS level allowed to be used included in the mapping restriction information corresponding to the logical channel is higher than or equal to an MCS level corresponding to the scheduling grant;
a list of configuration grant CGs allowed to be used included in the mapping restriction information corresponding to the logical channel includes a CG index corresponding to the scheduling grant;
configuration grant type allowed to be used included in the mapping restriction information corresponding to the logical channel is the same as a CG type of the scheduling grant;
maximum PUSCH duration allowed to be used included in the mapping restriction information corresponding to the logical channel is greater than or equal to a PUSCH duration corresponding to the scheduling grant;
a list of cells allowed to be used included in the mapping restriction information corresponding to the logical channel includes a cell corresponding to the scheduling grant;
carrier type allowed to be used included in the mapping restriction information corresponding to the logical channel is the same as a carrier type corresponding to the scheduling grant;
a list of subcarrier spacing (SCSs) allowed to be used included in the mapping restriction information corresponding to the logical channel includes an SCS corresponding to the scheduled grant;
maximum SCS allowed to be used included in the mapping restriction information corresponding to the logical channel is greater than or equal to an SCS corresponding to the scheduling grant.

In an optional implementation, in the step 403, the determining a logical channel allowed to use the scheduling grant based on the mapping restriction information corresponding to the logical channels, can include one of the following:
for the sidelink interface between UEs, based on the mapping restriction information corresponding to the logical channel, determining a logical channel that satisfies one or more of the following conditions as the logical channel allowed to use the scheduling grant:
highest order modulation and coding MCS level allowed to be used included in the mapping restriction information corresponding to the logical channel is higher than or equal to an MCS level corresponding to the scheduling grant;
a list of configuration grant CGs allowed to be used included in the mapping restriction information corresponding to the logical channel includes a CG index corresponding to the scheduling grant;
configuration grant type allowed to be used included in the mapping restriction information corresponding to the logical channel is the same as a CG type of the scheduling grant;
maximum PSSCH duration allowed to be used included in the mapping restriction information corresponding to the logical channel is greater than or equal to a PSSCH duration corresponding to the scheduling grant;
a list of subcarrier spacing (SCSs) allowed to be used included in the mapping restriction information corresponding to the logical channel includes an SCS corresponding to the scheduled grant;
maximum SCS allowed to be used included in the mapping restriction information corresponding to the logical channel is greater than or equal to an SCS corresponding to the scheduling grant.

In an optional embodiment, after the step 402, the method of the embodiment of the present disclosure further includes:
performing resource allocation based on the PDU set that allowed to use the scheduling grant.

In an optional embodiment, the performing resource allocation based on the PDU set that allowed to use the scheduling grant, may include:
S11: performing a first round of resource allocation for a first PDU set, where the first PDU set is a PDU whose remaining delay budget is lower than a first threshold, in the PDU set that allowed to use the scheduling grant.

Further, the step S11 may include:
in case that there are multiple first PDU sets, performing resource allocation for each of the first PDU sets in the multiple first PDU sets in descending order of priorities of multiple first PDU sets.

Optionally, the method in the embodiment of the present disclosure further includes
Manner 1: if there are remaining resources after the first round of resource allocation, performing a second round of resource allocation for PDU sets requiring resources among the PDU sets allowed to use the scheduling grant, excluding the first PDU set, in descending order of priorities of the PDU sets, until resources are exhausted or all PDU sets have been allocated resources;
   or,
manner 2: if there are remaining resources after the first round of resource allocation, in descending order of priorities of the PDU sets, performing a second round of resource allocation for remaining PDU sets among the PDU sets allowed to use the scheduling grant, excluding the first PDU set, according to PBRs corresponding to the PDU sets.

It is to be noted that the prioritized bit rate (PBR) is used to determine how many resources are allocated for each PDU set.
if there are remaining resources after the second round of resource allocation, in descending order of priorities of the PDU sets, resource allocation is performed for remaining data of PDU sets other than the first PDU set in the PDU sets allowed to use the scheduling grant, until the resource is exhausted or all PDU sets have been allocated resources.

In an optional embodiment, the performing resource allocation based on the PDU set that allowed to use the scheduling grant, may include:
performing a first round of resource allocation for PDU sets requiring resources among the PDU sets allowed to use the scheduling grant, in descending order of priorities of the PDU sets; or,
in descending order of priorities of the PDU sets, performing a first round of resource allocation for the PDU sets allowed to use the scheduling grant, based on PBR of each PDU set;
if there are remaining resources after the first round of resource allocation, in descending order of priorities of the PDU sets, performing resource allocation for remaining data of PDU sets allowed to use the scheduling grant, until the resource is exhausted or all PDU sets have been allocated resources.

In an optional embodiment, after the step 403, the method in the embodiment of the present disclosure further includes:
S21: performing resource allocation based on logical channels allowed to use the scheduling grant.

In an optional embodiment, the step S21 may include:
performing resource allocation for a first PDU set, where the first PDU set is a PDU set whose remaining delay budget is lower than a first threshold, in the PDU sets allowed to use the scheduling grant;
if there are remaining resources after performing resource allocation for the first PDU set, in descending order of priorities of logical channels, performing a first round of resource allocation or each logical channel allowed to use the scheduling grant according to PBR of the logical channel;
if there are remaining resources after performing the first round of resource allocation for each logical channel allowed to use the scheduling grant, in descending order of priorities of logical channels, performing resource allocation for remaining data in each logical channel allowed to use the scheduling grant, until the resources are exhausted or all data in each logical channel allowed to use the scheduling grant has been allocated resources.

In another optional embodiment, the step S21 may include:
in descending order of priorities of logical channels, performing a first round of resource allocation for each logical channel allowed to use the scheduling grant, according to PBRs of the logical channels;
if there are remaining resources after performing the first round of resource allocation for each logical channel allowed to use the scheduling grant, in descending order of priorities of logical channels, performing resource allocation for remaining data in each logical channel allowed to use the scheduling grant, until the resources are exhausted or all data in each logical channel allowed to use the scheduling grant have been allocated resources.

According to the information processing method in the embodiment of the present disclosure, by determining the mapping restriction information corresponding to the set PDU set; in case of receiving a scheduling grant, determining a PDU set allowed to use the scheduling grant based on the mapping restriction information corresponding to the PDU set; or, determining mapping restriction information corresponding to logical channels to which the PDU set belongs based on the mapping restriction information corresponding to the PDU set; in case of receiving the scheduling grant, determining a logical channel allowed to use the scheduling grant based on the mapping restriction information corresponding to the logical channels. In this way, the subsequent resource allocation for the PDU set can be realized on this basis, and the QoS of the PDU set can be guaranteed, thereby enhancing user experience of the XR service.

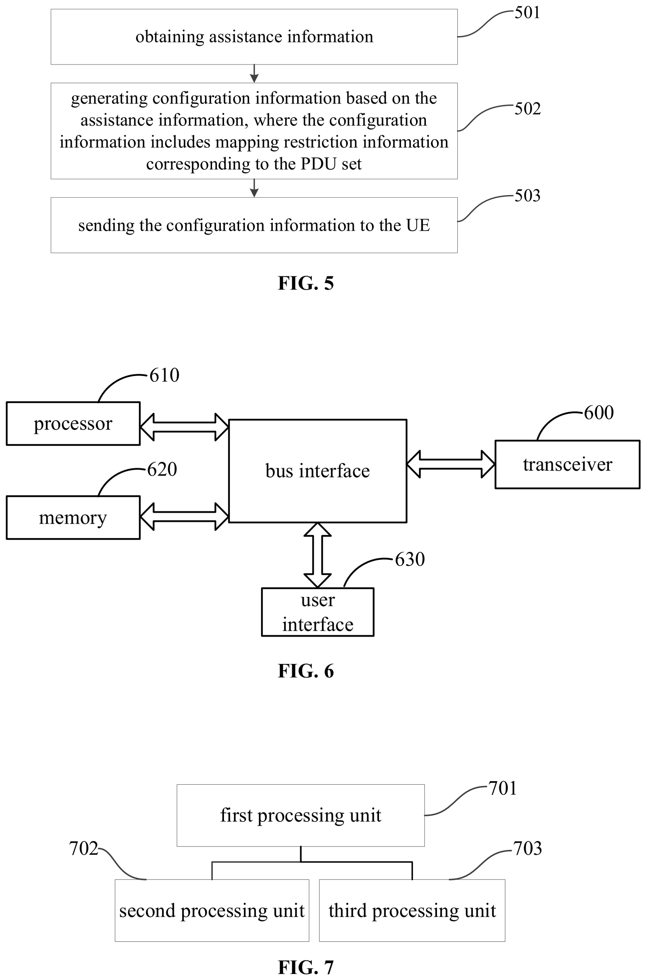

As shown in FIG. 5, it shows a schematic flowchart of an information transmission method according to an embodiment of the present disclosure, which is applied to a network device and includes:

Step 501: obtaining assistance information.

Optionally, the assistance information includes one or more of the following:
a full set of QoS parameters corresponding to one QoS profile or each PDU set within one QoS flow in UE Uu interface;
a subset of QoS parameters corresponding to one QoS profile or a PDU set within one QoS flow in UE Uu interface;
a full set of QoS parameters corresponding to one QoS profile or a PDU set that may appear within one QoS flow in UE Uu interface;
a subset of QoS parameters corresponding to one QoS profile or a PDU set that may appear within one QoS flow in UE Uu interface.

In an optional implementation, the step 501 may specifically include:
receiving assistance information reported by UE;

Here, the network device can receive the assistance information through a UE assistance information reporting process (for example, UE assistance information report).

Or, the network device receives assistance information from a core network device.
step 502: generating configuration information based on the assistance information, where the configuration information includes mapping restriction information corresponding to the PDU set.

Step 503: sending the configuration information to the UE.

In an optional implementation, the step 502 may specifically include:
in case that the UE is in an RRC connected state, sending a special RRC signaling to the UE, where the special RRC signaling includes the configuration information;
in case that the UE is in an RRC idle state or an RRC inactive state, sending system information to the UE, where the system information includes the configuration information.

Optionally, for the Uu interface between the UE and the network device, the mapping restriction information includes one or a combination of the following:
highest order modulation and coding MCS level allowed to be used;
a list of configuration grants (CGs) allowed to be used, where the CG list includes one or more CG indexes;
whether allow to use configuration grant type 1 (type 1 CG);
whether allow to use configuration grant type 2 (type 2 CG);
maximum physical uplink shared channel duration (PUSCH duration) allowed to be used;
a list of cells allowed to be used;
carrier type allowed to be used;
a list of subcarrier spacing (SCSs) allowed to be used;
maximum SCSs allowed to be used.

Optionally, for a sidelink interface between UEs, the mapping restriction information includes one or a combination of the following:
highest order modulation coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical sidelink shared channel (PSSCH) duration allowed to be used;
list of subcarrier spacing (SCSs) allowed to be used;
maximum SCSs allowed to be used.

According to the information transmission method in the embodiment of the present disclosure, through obtaining assistance information, then generating configuration information based on the assistance information, where the configuration information includes mapping restriction information corresponding to the PDU set, and finally sending the configuration information to the UE, the UE determines the PDU set or logical channel allowed to use the scheduling grant, so that the subsequent UE's resource allocation for the PDU set can be realized, thereby guarantying QoS of the PDU set and improving user experience of XR services.

Embodiment 1: for a Uu interface between a UE and a network device, determining PDU set allowed to use UL scheduling grant based on mapping restriction information.

Step 1: obtaining, by a network side assistance information.

It should be noted that this step is optional. This is because this step is only applicable if the UE is in an RRC connected state.

In this step, the network device can receive assistance information through UE assistance information report (such as UE assistance information report) process or from the core network.

The assistance information includes at least one of the following:
a full set or subset of QoS parameters corresponding to one QoS profile or each PDU set within one QoS flow in UE Uu interface;
a full set or subset of QoS parameters corresponding to one QoS profile or a PDU set that may appear within one QoS flow in UE Uu interface.

The mapping restriction information corresponding to the PDU set can be configured by the network device based on the assistance information.

Step 2: receiving, by the UE, the mapping restriction information corresponding to the PDU set sent by the network device.

If the UE is in the RRC connected state, the UE receives the configuration information sent by the network device through dedicated RRC information, where the configuration information includes at least the mapping restriction information corresponding to the PDU set.

For Uu interface between the UE and the network device, the mapping restriction information corresponding to PDU set, includes but not limited to one or a combination of the following:
highest order modulation coding MCS level allowed to be used;
a list of configuration grant CGs allowed to be used, where the CG list includes one or more CG indexes;
whether allow to use configuration grant type 1 (type 1 CG);
whether allow to use configuration grant type 2 (type 2 CG);
maximum physical uplink shared channel duration (PUSCH duration) allowed to be used;
a list of cells allowed to be used;
carrier type allowed to be used (such as UL and supplement UL carrier (SUL));
a list of subcarrier spacing (SCSs) allowed to be used;
maximum SCSs allowed to be used.

Step 3: receiving, by the UE, a UL grant and performing LCP.

First, PDU sets allowed to use the UL grant are determined, and the process is as follows:
for a UU interface between the UE and the network device, determining PDU sets allowed to use the UL grant, based on the mapping restriction information corresponding to the PDU sets.

Specifically, for a scheduling grant, one PDU set that satisfies the following conditions is allowed to use the scheduling grant:
if the mapping restriction information corresponding to the PDU set is configured with the highest order modulation and coding MCS level allowed to be used, then, the highest order modulation and coding MCS level allowed to be used included in the mapping restriction information corresponding to the PDU set is higher than or equal to an MCS level corresponding to the scheduling grant;
if the mapping restriction information corresponding to the PDU set is configured with a list of configuration grant CGs allowed to be used, then, the list of configuration grant CGs allowed to be used included in the mapping restriction information corresponding to the PDU set includes a CG index corresponding to the scheduling grant;
if the mapping restriction information corresponding to the PDU set is configured with type 1 CG allowed to be used, then the scheduling grant is type 1 CG;
if the mapping restriction information corresponding to the PDU set is configured with type 2 CG allowed to be used, then the scheduling grant is type 2 CG;
if the mapping restriction information corresponding to the PDU set is configured with maximum PUSCH duration allowed to be used, then the maximum PUSCH duration allowed to be used included in the mapping restriction information corresponding to the PDU set is greater than or equal to a PUSCH duration corresponding to the scheduling grant;
if the mapping restriction information corresponding to the PDU set is configured with a list of cells allowed to be used, then the scheduling grant is a scheduling grant on a cell included in the cell list;
if the mapping restriction information corresponding to the PDU set is configured with a carrier type allowed to be used, then a carrier type corresponding to the scheduling grant is the carrier type allowed to be used;
if the mapping restriction information corresponding to the PDU set is configured with a list of subcarrier spacing (SCSs) allowed to be used, an SCS corresponding to the scheduled grant is an SCS included in the list of subcarrier spacing (SCSs) allowed to be used;
if the mapping restriction information corresponding to the PDU set is configured with a maximum SCS allowed to be used, then the maximum SCS allowed to be used included in the mapping restriction information corresponding to the PDU set is greater than or equal to an SCS corresponding to the scheduling grant.

It is to be noted that if mapping restriction is configured, conditions corresponding to the mapping restriction need to be met, and if not, the corresponding conditions do not need to be met.

Then, after determining the PDU set allowed to use the scheduling grant, the resource allocation process is performed. The specific resource allocation process is as follows.

First, the UE determines a PDU set whose remaining packet delay budget is lower than a threshold in the PDU sets allowed to use the scheduling grant, and prioritizes allocating resources to them in a first round of resource allocation;
if there are multiple PDU sets whose remaining packet delay budget is lower than the threshold, resources are allocated to each PDU set of the multiple PDU sets in descending order of priorities of the multiple PDU sets;
after that, if there are any remaining resources, in descending order of priorities of the PDU sets, a second round of resource allocation are sequentially performed for PDU sets requiring resources, among the PDU sets allowed to use the scheduling grant excluding the PDU sets whose remaining packet delay budget is lower than the threshold, until resources are exhausted or all PDU sets have been allocated resources;
   or,
if there are remaining resources after the first round of resource allocation, in descending order of priorities of the PDU sets, a second round of resource allocation are sequentially performed for PDU sets among the PDU sets allowed to use the scheduling grant excluding the PDU sets whose remaining packet delay budget is lower than the threshold, according to PBR corresponding to the PDU sets;
if there are remaining resources after the second round of resource allocation, in descending order of priorities of the PDU sets, resource allocation is sequentially performed for remaining data of other PDU sets among the PDU sets allowed to use the scheduling grant excluding the PDU sets whose remaining packet delay budget is lower than the threshold, until resources are exhausted or all PDU sets have been allocated resources.

The specific resource allocation process can also be as follows:
in descending order of priorities of the PDU sets, performing a first round of resource allocation for PDU sets requiring resources in the PDU sets allowed to use the scheduling grant;
if there are remaining resources after the first round of resource allocation, in descending order of priorities of the PDU sets, performing resource allocation for remaining data of the PDU sets allowed to use the scheduling grant, until the resources are exhausted or all PDUs have been allocated resources;
   or,
in descending order of priorities of the PDU sets, performing a first round of resource allocation for PDU sets allowed to use the scheduling grant, according to PBR corresponding to the PDU sets;
if there are remaining resources after the first round of resource allocation, in descending order of priorities of the PDU sets, performing resource allocation for remaining data of the PDU sets allowed to use the scheduling grant, until the resources are exhausted or all PDUs have been allocated resources.

Embodiment 2: for a sidelink interface between UEs, determining PDU sets allowed to use UL scheduling grant based on the mapping restriction information.

Step 1: obtaining, by a network side assistance information.

It should be noted that this step is optional.

The process of obtaining assistance information and the content of the assistance information are described in the embodiment 1, and are not repeated here.

Step 2: obtaining, by the UE, mapping restriction information corresponding to the PDU set.

This step is implemented in the following ways:
if the UE is in the RRC connected state, the UE receives the configuration information sent by the network device through dedicated RRC information, where the configuration information includes at least the mapping restriction information corresponding to the PDU set;
if the UE is in an RRC idle state or RRC inactive state, receiving the configuration information sent by the network device through system information, where the configuration information includes at least the mapping restriction information corresponding to the PDU set;
if the UE is in an out of coverage (OOC) state, determining the mapping restriction information corresponding to the PDU set based on preconfigured information.

Optionally, for a sidelink interface between UEs, the mapping restriction information corresponding to the PDU set includes one or a combination of the following:
highest order modulation coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical sidelink shared channel (PSSCH) duration allowed to be used;
a list of subcarrier spacing (SCSs) allowed to be used;
a maximum SCSs allowed to be used.

Step 3: receiving, by the UE, a SL grant and performing LCP.

First, PDU sets allowed to use the SL grant are determined, and the process is as follows:
for an SL interface between the UEs, determining PDU sets allowed to use the SL grant, based on the mapping restriction information corresponding to the PDU sets.

Specifically, for a scheduling grant, one PDU set that satisfies the following conditions is allowed to use the scheduling grant:
if the mapping restriction information corresponding to the PDU set is configured with the highest order modulation and coding MCS level allowed to be used, then, the highest order modulation and coding MCS level allowed to be used included in the mapping restriction information corresponding to the PDU set is higher than or equal to an MCS level corresponding to the scheduling grant;
if the mapping restriction information corresponding to the PDU set is configured with a list of configuration grant CGs allowed to be used, then, the list of configuration grant CGs allowed to be used included in the mapping restriction information corresponding to the PDU set includes a CG index corresponding to the scheduling grant;
if the mapping restriction information corresponding to the PDU set is configured with type 1 CG allowed to be used, then the scheduling grant is type 1 CG;
if the mapping restriction information corresponding to the PDU set is configured with type 2 CG allowed to be used, then the scheduling grant is type 2 CG;
if the mapping restriction information corresponding to the PDU set is configured with maximum PUSCH duration allowed to be used, then the maximum PUSCH duration allowed to be used included in the mapping restriction information corresponding to the PDU set is greater than or equal to a PUSCH duration corresponding to the scheduling grant;
if the mapping restriction information corresponding to the PDU set is configured with a list of cells allowed to be used, then the scheduling grant is a scheduling grant on a cell included in the cell list;
if the mapping restriction information corresponding to the PDU set is configured with a carrier type allowed to be used, then a carrier type corresponding to the scheduling grant is the carrier type allowed to be used;
if the mapping restriction information corresponding to the PDU set is configured with a list of subcarrier spacing (SCSs) allowed to be used, an SCS corresponding to the scheduled grant is an SCS included in the list of subcarrier spacing (SCSs) allowed to be used;
if the mapping restriction information corresponding to the PDU set is configured with a maximum SCS allowed to be used, then the maximum SCS allowed to be used included in the mapping restriction information corresponding to the PDU set is greater than or equal to an SCS corresponding to the scheduling grant.

It is to be noted that if mapping restriction is configured, conditions corresponding to the mapping restriction need to be met, and if not, the corresponding conditions do not need to be met.

Then, after determining the PDU set allowed to use the scheduling grant, the resource allocation process is performed. The specific resource allocation process is described in the embodiment 1, and will not be repeated here.

Embodiment 3: for Uu interface between a UE and a network device, determining a logical channel allowed to use a UL scheduling grant based on the mapping restriction information.

Step 1: obtaining, by a network side, assistance information.

It should be noted that this step is optional.

The process of obtaining assistance information and the content of the assistance information are described in the embodiment 1, and are not repeated here.

Step 2: receiving, by the UE, the mapping restriction information corresponding to the PDU set sent by the network device.

If the UE is in the RRC connected state, the UE receives the configuration information sent by the network device through dedicated RRC information, where the configuration information includes at least the mapping restriction information corresponding to the PDU set.

For Uu interface between the UE and the network device, the mapping restriction information corresponding to PDU set, includes but not limited to one or a combination of the following:
highest order modulation coding MCS level allowed to be used;
a list of configuration grant CGs allowed to be used, where the CG list includes one or more CG indexes;
whether allow to use configuration grant type 1 (type 1 CG);
whether allow to use configuration grant type 2 (type 2 CG);
maximum physical uplink shared channel duration (PUSCH duration) allowed to be used;
a list of cells allowed to be used;
carrier type allowed to be used (such as UL and supplement UL carrier (SUL));
a list of subcarrier spacing (SCSs) allowed to be used;
maximum SCSs allowed to be used.

Step 3: receiving, by the UE, a UL grant and performing LCP.

First, logic channels allowed to use the UL grant are determined, and the process is as follows:
determining mapping restriction information corresponding to logical channels to which the PDU set belongs based on the mapping restriction information corresponding to the PDU set;
when the UE receives a scheduling grant, determining a logical channel allowed to use the scheduling grant based on the mapping restriction information corresponding to the logical channel.

The determining mapping restriction information corresponding to logical channels to which the PDU set belongs based on the mapping restriction information corresponding to the PDU set, can include one of the following:
determining mapping restriction information corresponding to the PDU set in a current buffer of the logical channel to which the PDU set belongs, which is earliest arrived, or has a highest priority, or has a smallest remaining delay budget, as the mapping restriction information corresponding to the logical channel to which the PDU set belongs;
determining an intersection set of mapping restriction information corresponding to earliest arrived N PDU sets, or N PDU sets of highest priorities, or N PDU sets with the smallest remaining delay budget, in a current buffer of the logical channel to which the PDU set belongs, as the mapping restriction information corresponding to the logical channel to which the PDU set belongs, wherein N is an integer greater than 1;
determining an intersection set of mapping restriction information corresponding to a logical channel of the user equipment and mapping restriction information corresponding to the PDU set in a current buffer of the logical channel to which the PDU set belongs, which is earliest arrived, or has a highest priority, or has a smallest remaining delay budget, as the mapping restriction information corresponding to the logical channel to which the PDU set belongs;
determining an intersection set of mapping restriction information corresponding to a logical channel of the user equipment and mapping restriction information corresponding to earliest arrived N PDU sets, or N PDU sets of highest priorities, or N PDU sets with the smallest remaining delay budget, in a current buffer of the logical channel to which the PDU set belongs, as the mapping restriction information corresponding to the logical channel to which the PDU set belongs, wherein N is an integer greater than 1.

For Uu interface between the user equipment and the network device, based on the mapping restriction information corresponding to the logical channel, a logical channel that satisfies one or more of the following conditions is determined as the logical channel allowed to use the scheduling grant, which specifically includes:
if the mapping restriction information corresponding to the logical channel is configured with the highest order modulation and coding MCS level allowed to be used, then, the highest order modulation and coding MCS level allowed to be used included in the mapping restriction information corresponding to the logical channel is higher than or equal to an MCS level corresponding to the scheduling grant;
if the mapping restriction information corresponding to the logical channel is configured with a list of configuration grant CGs allowed to be used, then, the list of configuration grant CGs allowed to be used included in the mapping restriction information corresponding to the logical channel includes a CG index corresponding to the scheduling grant;
if the mapping restriction information corresponding to the logical channel is configured with type 1 CG allowed to be used, then the scheduling grant is type 1 CG;
if the mapping restriction information corresponding to the logical channel is configured with type 2 CG allowed to be used, then the scheduling grant is type 2 CG;
if the mapping restriction information corresponding to the logical channel is configured with maximum PUSCH duration allowed to be used, then the maximum PUSCH duration allowed to be used included in the mapping restriction information corresponding to the logical channel is greater than or equal to a PUSCH duration corresponding to the scheduling grant;
if the mapping restriction information corresponding to the logical channel is configured with a list of cells allowed to be used, then the scheduling grant is a scheduling grant on a cell included in the cell list;
if the mapping restriction information corresponding to the logical channel is configured with a carrier type allowed to be used, then a carrier type corresponding to the scheduling grant is the carrier type allowed to be used;
if the mapping restriction information corresponding to the logical channel is configured with a list of subcarrier spacing (SCSs) allowed to be used, an SCS corresponding to the scheduled grant is an SCS included in the list of subcarrier spacing (SCSs) allowed to be used;
if the mapping restriction information corresponding to the logical channel is configured with a maximum SCS allowed to be used, then the maximum SCS allowed to be used included in the mapping restriction information corresponding to the logical channel is greater than or equal to an SCS corresponding to the scheduling grant.

It is to be noted that if mapping restriction is configured, conditions corresponding to the mapping restriction need to be met, and if not, the corresponding conditions do not need to be met.

Then, after determining the logical channel allowed to use the scheduling grant, the resource allocation process is performed. The specific resource allocation process is as follows.

First, the UE determines a PDU set whose remaining packet delay budget is lower than a threshold in the PDU sets allowed to use the scheduling grant, and prioritizes allocating resources to them in a first round of resource allocation;
after that, if there are remaining resources, in descending order of priorities of the logic channels, a first round of resource allocation is performed for logic channels allowed to use the scheduling grant, according to PBR corresponding to the logic channels;
if there are remaining resources after the first round of resource allocation for each logic channel allowed to use the scheduling grant, in descending order of priorities of the logic channels, resource allocation is sequentially performed for remaining data of each logic channel allowed to use the scheduling grant, until resources are exhausted or all data in each logical channel allowed to use the scheduling grant has been allocated.
   or,
in descending order of priorities of the logic channels, a first round of resource allocation is performed for each logic channel allowed to use the scheduling grant, according to the PBR of the logical channel;
if there are remaining resources after the first round of resource allocation for each logical channel allowed to use the scheduling grant, in descending order of priorities of the logic channels, resource allocation is performed for remaining data in each logical channel allowed to use the scheduling grant, until resources are exhausted or all data in each logical channel allowed to use the scheduling grant has been allocated.

Embodiment 4: for a sidelink interface between UEs, determining a logical channel allowed to use a UL scheduling grant based on the mapping restriction information.

Step 1: obtaining, by a network side assistance information.

It should be noted that this step is optional.

The process of obtaining assistance information and the content of the assistance information are described in the embodiment 1, and are not repeated here.

Step 2: obtaining, by the UE, mapping restriction information corresponding to the PDU set.

This step is implemented in the following ways:
if the UE is in the RRC connected state, the UE receives the configuration information sent by the network device through dedicated RRC information, where the configuration information includes at least the mapping restriction information corresponding to the PDU set;
if the UE is in an RRC idle state or RRC inactive state, receiving the configuration information sent by the network device through system information, where the configuration information includes at least the mapping restriction information corresponding to the PDU set;
if the UE is in an out of coverage (OOC) state, determining the mapping restriction information corresponding to the PDU set based on preconfigured information.

For a sidelink interface between UEs, the mapping restriction information corresponding to the PDU set includes one or a combination of the following:
highest order modulation coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical sidelink shared channel (PSSCH) duration allowed to be used;
a list of subcarrier spacing (SCSs) allowed to be used;
a maximum SCSs allowed to be used.

Step 3: receiving, by the UE, a SL grant and performing LCP.

First, PDU sets allowed to use the SL grant are determined, and the process is as follows.

First, logic channels allowed to use the SL grant are determined, and the process is as follows:
determining mapping restriction information corresponding to logical channels to which the PDU set belongs based on the mapping restriction information corresponding to the PDU set;
when the UE receives a scheduling grant, determining a logical channel allowed to use the scheduling grant based on the mapping restriction information corresponding to the logical channel.

The specific way of determining mapping restriction information corresponding to logical channels to which the PDU set belongs based on the mapping restriction information corresponding to the PDU set is described in the embodiment 3, and will not be repeated here.

For the sidelink interface between the UEs, based on the mapping restriction information corresponding to the logical channel, a logical channel that satisfies one or more of the following conditions is determined as the logical channel allowed to use the scheduling grant, which specifically includes:
if the mapping restriction information corresponding to the logical channel includes the highest order modulation and coding MCS level allowed to be used, then, the highest order modulation and coding MCS level allowed to be used included in the mapping restriction information corresponding to the logical channel is higher than or equal to an MCS level corresponding to the scheduling grant;
if the mapping restriction information corresponding to the logical channel includes a list of configuration grant CGs allowed to be used, then, the list of configuration grant CGs allowed to be used included in the mapping restriction information corresponding to the logical channel includes a CG index corresponding to the scheduling grant;
if the mapping restriction information corresponding to the logical channel includes type 1 CG allowed to be used, then the scheduling grant is type 1 CG;
if the mapping restriction information corresponding to the logical channel is configured with type 2 CG allowed to be used, then the scheduling grant is type 2 CG;
if the mapping restriction information corresponding to the logical channel is configured with maximum PSSCH duration allowed to be used, then the maximum PSSCH duration allowed to be used included in the mapping restriction information corresponding to the logical channel is greater than or equal to a PSSCH duration corresponding to the scheduling grant;
if the mapping restriction information corresponding to the logical channel is configured with a list of subcarrier spacing (SCSs) allowed to be used, an SCS corresponding to the scheduled grant is an SCS included in the list of subcarrier spacing (SCSs) allowed to be used;
if the mapping restriction information corresponding to the logical channel is configured with a maximum SCS allowed to be used, then the maximum SCS allowed to be used included in the mapping restriction information corresponding to the logical channel is greater than or equal to an SCS corresponding to the scheduling grant.

It is to be noted that if mapping restriction is configured, conditions corresponding to the mapping restriction need to be met, and if not, the corresponding conditions do not need to be met.

Then, after determining the logical channel allowed to use the scheduling grant, the resource allocation process is performed. The specific resource allocation process is described in the embodiment 3, and is not repeated here.

As shown in FIG. 6, one embodiment of the present disclosure further provides a user equipment (UE), including a memory 620, a transceiver 600, and a processor 610. The memory 620 is used to store program instructions. The transceiver 600 is used to send and receive data under the control of the processor 610. The processor 610 is used to read the program instructions in the memory 620 and performing the following operations:
determining mapping restriction information corresponding to a protocol data unit (PDU) set;
in case of receiving a scheduling grant, determining a PDU set allowed to use the scheduling grant based on the mapping restriction information corresponding to the PDU set; or,
determining mapping restriction information corresponding to logical channels to which the PDU set belongs based on the mapping restriction information corresponding to the PDU set; in case of receiving the scheduling grant, determining a logical channel allowed to use the scheduling grant based on the mapping restriction information corresponding to the logical channels.

In FIG. 6, a bus architecture may include any number of interconnected bus and bridge. Specifically, various circuits of one or more processors, which are represented by the processor 610, and one or more memories, which are represented by the memory 620, are linked together. The bus architecture may link various other circuits, such as a peripheral device, voltage regulator and a power management circuit together. These features are well known in this field; therefore, the present disclosure does not make further description on these features. The bus interface provides an interface. The transceiver 600 may be multiple elements, including a transmitter and a receiver and provide units, which communicate with other devices on the transmission medium. The transmission medium includes transmission media such as wireless channels, wired channels, and optical cables. For different UEs, a user interface 630 may be an interface that can be connected to external or internal devices. The connected devices include but are not limited to a small keyboard, a display, a speaker, a microphone, a joystick, etc.

The processor 610 is responsible for managing the bus architecture and the normal processing. The memory 620 may be used to store data used by the processor 610 for performing operations.

Optionally, the processor 610 may be a central processing unit (CPU), an application specific integrated circuit (ASIC), a field-programmable gate array (FPGA) or a complex programmable logic device (CPLD). The processor 610 may also adopt multi-core architecture.

The processor 610 calls the computer program stored in the memory to execute any of the methods provided by the embodiments of the present disclosure according to obtained executable instructions. The processor 610 and the memory 620 may also be arranged physically separately.

Optionally, the processor 610 is further used to:
receive configuration information sent by a network device, where the configuration information includes mapping restriction information corresponding to the PDU set;
or, the processor 610 is further used to:
when the user equipment is in an out of coverage (OOC) state, determine the mapping restriction information corresponding to the PDU set based on preconfigured information.

Optionally, the processor 610 is further used to:
in case that the UE is in an RRC connected state, receiving the configuration information sent by the network device through dedicated RRC information, where the configuration information includes at least the mapping restriction information corresponding to the PDU set;
   or,
in case that the user equipment is in an RRC idle state or RRC inactive state, receive the configuration information sent by the network device through system information.

Optionally, the processor 610 is further used to:
determine mapping restriction information corresponding to the PDU set in a current buffer of the logical channel to which the PDU set belongs, which is earliest arrived, or has a highest priority, or has a smallest remaining delay budget, as the mapping restriction information corresponding to the logical channel to which the PDU set belongs;
determine an intersection set of mapping restriction information corresponding to earliest arrived N PDU sets, or N PDU sets of highest priorities, or N PDU sets with the smallest remaining delay budget, in a current buffer of the logical channel to which the PDU set belongs, as the mapping restriction information corresponding to the logical channel to which the PDU set belongs, wherein N is an integer greater than 1;
determine an intersection set of mapping restriction information corresponding to a logical channel of the user equipment and mapping restriction information corresponding to the PDU set in a current buffer of the logical channel to which the PDU set belongs, which is earliest arrived, or has a highest priority, or has a smallest remaining delay budget, as the mapping restriction information corresponding to the logical channel to which the PDU set belongs; or,
determine an intersection set of mapping restriction information corresponding to a logical channel of the user equipment and mapping restriction information corresponding to earliest arrived N PDU sets, or N PDU sets of highest priorities, or N PDU sets with the smallest remaining delay budget, in a current buffer of the logical channel to which the PDU set belongs, as the mapping restriction information corresponding to the logical channel to which the PDU set belongs, wherein N is an integer greater than 1.

Optionally, for the Uu interface between the UE and the network device, the mapping restriction information includes one or a combination of the following:
highest order modulation and coding MCS level allowed to be used;
a list of configuration grants (CGs) allowed to be used, where the CG list includes one or more CG indexes;
whether allow to use configuration grant type 1 (type 1 CG);
whether allow to use configuration grant type 2 (type 2 CG);
maximum physical uplink shared channel duration (PUSCH duration) allowed to be used;
a list of cells allowed to be used;
carrier type allowed to be used;
a list of subcarrier spacing (SCSs) allowed to be used;
maximum SCSs allowed to be used.

Optionally, for a sidelink interface between UEs, the mapping restriction information includes one or a combination of the following:
highest order modulation coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical sidelink shared channel (PSSCH) duration allowed to be used;
list of subcarrier spacing (SCSs) allowed to be used;
maximum SCSs allowed to be used.

Optionally, the processor 610 is also used to:
for the Uu interface between the user equipment and the network device, based on the mapping restriction information corresponding to the PDU set, determine a PDU set that satisfies one or more of the following conditions as the PDU set allowed to use the scheduling grant:
highest order modulation and coding MCS level allowed to be used included in the mapping restriction information corresponding to the PDU set is higher than or equal to an MCS level corresponding to the scheduling grant;
a list of configuration grant CGs allowed to be used included in the mapping restriction information corresponding to the PDU set includes a CG index corresponding to the scheduling grant;
configuration grant type allowed to be used included in the mapping restriction information corresponding to the PDU set is the same as a CG type of the scheduling grant;
maximum PUSCH duration allowed to be used included in the mapping restriction information corresponding to the PDU set is greater than or equal to a PUSCH duration corresponding to the scheduling grant;
a list of cells allowed to be used included in the mapping restriction information corresponding to the PDU set includes a cell corresponding to the scheduling grant;
carrier type allowed to be used included in the mapping restriction information corresponding to the PDU set is the same as a carrier type corresponding to the scheduling grant;
a list of subcarrier spacing (SCSs) allowed to be used included in the mapping restriction information corresponding to the PDU set includes an SCS corresponding to the scheduled grant;
maximum SCS allowed to be used included in the mapping restriction information corresponding to the PDU set is greater than or equal to an SCS corresponding to the scheduling grant.

Optionally, the processor 610 is also used to:
for the sidelink interface between UEs, based on the mapping restriction information corresponding to the PDU set, determine a PDU set that satisfies one or more of the following conditions as the PDU set allowed to use the scheduling grant:
highest order modulation and coding MCS level allowed to be used included in the mapping restriction information corresponding to the PDU set is higher than or equal to an MCS level corresponding to the scheduling grant;
a list of configuration grant CGs allowed to be used included in the mapping restriction information corresponding to the PDU set includes a CG index corresponding to the scheduling grant;
configuration grant type allowed to be used included in the mapping restriction information corresponding to the PDU set is the same as a CG type of the scheduling grant;
maximum PSSCH duration allowed to be used included in the mapping restriction information corresponding to the PDU set is greater than or equal to a PSSCH duration corresponding to the scheduling grant;
a list of subcarrier spacing (SCSs) allowed to be used included in the mapping restriction information corresponding to the PDU set includes an SCS corresponding to the scheduled grant;
maximum SCS allowed to be used included in the mapping restriction information corresponding to the PDU set is greater than or equal to an SCS corresponding to the scheduling grant.

Optionally, the processor 610 is also used to:
for Uu interface between the user equipment and the network device, based on the mapping restriction information corresponding to the logical channel, determine a logical channel that satisfies one or more of the following conditions as the logical channel allowed to use the scheduling grant:
highest order modulation and coding MCS level allowed to be used included in the mapping restriction information corresponding to the logical channel is higher than or equal to an MCS level corresponding to the scheduling grant;
a list of configuration grant CGs allowed to be used included in the mapping restriction information corresponding to the logical channel includes a CG index corresponding to the scheduling grant;
configuration grant type allowed to be used included in the mapping restriction information corresponding to the logical channel is the same as a CG type of the scheduling grant;
maximum PUSCH duration allowed to be used included in the mapping restriction information corresponding to the logical channel is greater than or equal to a PUSCH duration corresponding to the scheduling grant;
a list of cells allowed to be used included in the mapping restriction information corresponding to the logical channel includes a cell corresponding to the scheduling grant;
carrier type allowed to be used included in the mapping restriction information corresponding to the logical channel is the same as a carrier type corresponding to the scheduling grant;
a list of subcarrier spacing (SCSs) allowed to be used included in the mapping restriction information corresponding to the logical channel includes an SCS corresponding to the scheduled grant;
maximum SCS allowed to be used included in the mapping restriction information corresponding to the logical channel is greater than or equal to an SCS corresponding to the scheduling grant.

Optionally, the processor 610 is also used to:
for the sidelink interface between UEs, based on the mapping restriction information corresponding to the logical channel, determine a logical channel that satisfies one or more of the following conditions as the logical channel allowed to use the scheduling grant:
highest order modulation and coding MCS level allowed to be used included in the mapping restriction information corresponding to the logical channel is higher than or equal to an MCS level corresponding to the scheduling grant;
a list of configuration grant CGs allowed to be used included in the mapping restriction information corresponding to the logical channel includes a CG index corresponding to the scheduling grant;
configuration grant type allowed to be used included in the mapping restriction information corresponding to the logical channel is the same as a CG type of the scheduling grant;
maximum PSSCH duration allowed to be used included in the mapping restriction information corresponding to the logical channel is greater than or equal to a PSSCH duration corresponding to the scheduling grant;
a list of subcarrier spacing (SCSs) allowed to be used included in the mapping restriction information corresponding to the logical channel includes an SCS corresponding to the scheduled grant;
maximum SCS allowed to be used included in the mapping restriction information corresponding to the logical channel is greater than or equal to an SCS corresponding to the scheduling grant.

Optionally, the processor 610 is also used to:
perform resource allocation based on the PDU set allowed to use the scheduling grant.

Optionally, the processor 610 is also used to:
perform a first round of resource allocation for a first PDU set, where the first PDU set is a PDU whose remaining delay budget is lower than a first threshold, in the PDU set that allowed to use the scheduling grant.

Optionally, the processor 610 is also used to:
in case that there are multiple first PDU sets, perform resource allocation for each of the first PDU sets in the multiple first PDU sets in descending order of priorities of multiple first PDU sets.

Optionally, the processor 610 is also used to:
if there are remaining resources after the first round of resource allocation, perform a second round of resource allocation for PDU sets requiring resources among the PDU sets allowed to use the scheduling grant, excluding the first PDU set, in descending order of priorities of the PDU sets, until resources are exhausted or all PDU sets have been allocated resources;
   or,
if there are remaining resources after the first round of resource allocation, in descending order of priorities of the PDU sets, performing a second round of resource allocation for PDU sets requiring resources among the PDU sets allowed to use the scheduling grant, excluding the first PDU set, according to PBRs corresponding to the PDU sets.

Optionally, the processor 610 is also used to:
perform a first round of resource allocation for PDU sets requiring resources among the PDU sets allowed to use the scheduling grant, in descending order of priorities of the PDU sets; or,
in descending order of priorities of the PDU sets, perform a first round of resource allocation for the PDU sets allowed to use the scheduling grant, based on PBR of each PDU set;
if there are remaining resources after the first round of resource allocation, in descending order of priorities of the PDU sets, perform resource allocation for remaining data of PDU sets allowed to use the scheduling grant, until the resource is exhausted or all PDU sets have been allocated resources.

Optionally, the processor 610 is also used to:
perform resource allocation based on logical channels allowed to use the scheduling grant.

Optionally, the processor 610 is also used to:
perform resource allocation for a first PDU set, where the first PDU set is a PDU set whose remaining delay budget is lower than a first threshold, in the PDU sets allowed to use the scheduling grant;
if there are remaining resources after performing resource allocation for the first PDU set, in descending order of priorities of logical channels, perform a first round of resource allocation or each logical channel allowed to use the scheduling grant according to PBR of the logical channel;
if there are remaining resources after performing the first round of resource allocation for each logical channel allowed to use the scheduling grant, in descending order of priorities of logical channels, perform resource allocation for remaining data in each logical channel allowed to use the scheduling grant, until the resources are exhausted or all data in each logical channel allowed to use the scheduling grant has been allocated resources.

Optionally, the processor 610 is also used to:
in descending order of priorities of logical channels, perform a first round of resource allocation for each logical channel allowed to use the scheduling grant, according to PBRs of the logical channels;
if there are remaining resources after performing the first round of resource allocation for each logical channel allowed to use the scheduling grant, in descending order of priorities of logical channels, perform resource allocation for remaining data in each logical channel allowed to use the scheduling grant, until the resources are exhausted or all data in each logical channel allowed to use the scheduling grant have been allocated resources.

According to the UE in the embodiment of the present disclosure, by determining the mapping restriction information corresponding to the set PDU set; in case of receiving a scheduling grant, determining a PDU set allowed to use the scheduling grant based on the mapping restriction information corresponding to the PDU set; or, determining mapping restriction information corresponding to logical channels to which the PDU set belongs based on the mapping restriction information corresponding to the PDU set; in case of receiving the scheduling grant, determining a logical channel allowed to use the scheduling grant based on the mapping restriction information corresponding to the logical channels. In this way, the subsequent resource allocation for the PDU set can be realized on this basis, and the QoS of the PDU set can be guaranteed, thereby enhancing user experience of the XR service.

As shown in FIG. 7, one embodiment of the present disclosure further provides an information processing device, including:
a first processing unit 701 used to determine mapping restriction information corresponding to a protocol data unit (PDU) set;
a second processing unit 702 used to, in case of receiving a scheduling grant, determine a PDU set allowed to use the scheduling grant based on the mapping restriction information corresponding to the PDU set; or,
a third processing unit 703 used to determine mapping restriction information corresponding to logical channels to which the PDU set belongs based on the mapping restriction information corresponding to the PDU set; in case of receiving the scheduling grant, determining a logical channel allowed to use the scheduling grant based on the mapping restriction information corresponding to the logical channels.

Optionally, the first processing unit 701 is specifically used to:
receive configuration information sent by a network device, where the configuration information includes mapping restriction information corresponding to the PDU set;
   or,
when the user equipment is in an out of coverage (OOC) state, determine the mapping restriction information corresponding to the PDU set based on preconfigured information.

Optionally, the first processing unit 701 is specifically used to:
in case that the UE is in an RRC connected state, receiving the configuration information sent by the network device through dedicated RRC information, where the configuration information includes at least the mapping restriction information corresponding to the PDU set;
   or,
in case that the user equipment is in an RRC idle state or RRC inactive state, receive the configuration information sent by the network device through system information.

Optionally, the third processing unit 703 is specifically used to:
determine mapping restriction information corresponding to the PDU set in a current buffer of the logical channel to which the PDU set belongs, which is earliest arrived, or has a highest priority, or has a smallest remaining delay budget, as the mapping restriction information corresponding to the logical channel to which the PDU set belongs;
determine an intersection set of mapping restriction information corresponding to earliest arrived N PDU sets, or N PDU sets of highest priorities, or N PDU sets with the smallest remaining delay budget, in a current buffer of the logical channel to which the PDU set belongs, as the mapping restriction information corresponding to the logical channel to which the PDU set belongs, wherein N is an integer greater than 1;
determine an intersection set of mapping restriction information corresponding to a logical channel of the user equipment and mapping restriction information corresponding to the PDU set in a current buffer of the logical channel to which the PDU set belongs, which is earliest arrived, or has a highest priority, or has a smallest remaining delay budget, as the mapping restriction information corresponding to the logical channel to which the PDU set belongs; or,
determine an intersection set of mapping restriction information corresponding to a logical channel of the user equipment and mapping restriction information corresponding to earliest arrived N PDU sets, or N PDU sets of highest priorities, or N PDU sets with the smallest remaining delay budget, in a current buffer of the logical channel to which the PDU set belongs, as the mapping restriction information corresponding to the logical channel to which the PDU set belongs, wherein N is an integer greater than 1.

Optionally, for the Uu interface between the UE and the network device, the mapping restriction information includes one or a combination of the following:
highest order modulation and coding MCS level allowed to be used;
a list of configuration grants (CGs) allowed to be used, where the CG list includes one or more CG indexes;
whether allow to use configuration grant type 1 (type 1 CG);
whether allow to use configuration grant type 2 (type 2 CG);
maximum physical uplink shared channel duration (PUSCH duration) allowed to be used;
a list of cells allowed to be used;
carrier type allowed to be used;
a list of subcarrier spacing (SCSs) allowed to be used;
maximum SCSs allowed to be used.

Optionally, for a sidelink interface between UEs, the mapping restriction information includes one or a combination of the following:
highest order modulation coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical sidelink shared channel (PSSCH) duration allowed to be used;
list of subcarrier spacing (SCSs) allowed to be used;
maximum SCSs allowed to be used.

Optionally, the second processing unit 702 is also used to:
for the Uu interface between the user equipment and the network device, based on the mapping restriction information corresponding to the PDU set, determine a PDU set that satisfies one or more of the following conditions as the PDU set allowed to use the scheduling grant:
highest order modulation and coding MCS level allowed to be used included in the mapping restriction information corresponding to the PDU set is higher than or equal to an MCS level corresponding to the scheduling grant;
a list of configuration grant CGs allowed to be used included in the mapping restriction information corresponding to the PDU set includes a CG index corresponding to the scheduling grant;
configuration grant type allowed to be used included in the mapping restriction information corresponding to the PDU set is the same as a CG type of the scheduling grant;
maximum PUSCH duration allowed to be used included in the mapping restriction information corresponding to the PDU set is greater than or equal to a PUSCH duration corresponding to the scheduling grant;
a list of cells allowed to be used included in the mapping restriction information corresponding to the PDU set includes a cell corresponding to the scheduling grant;
carrier type allowed to be used included in the mapping restriction information corresponding to the PDU set is the same as a carrier type corresponding to the scheduling grant;
a list of subcarrier spacing (SCSs) allowed to be used included in the mapping restriction information corresponding to the PDU set includes an SCS corresponding to the scheduled grant;
maximum SCS allowed to be used included in the mapping restriction information corresponding to the PDU set is greater than or equal to an SCS corresponding to the scheduling grant.

Optionally, the second processing unit 702 is also used to:
for the sidelink interface between UEs, based on the mapping restriction information corresponding to the PDU set, determine a PDU set that satisfies one or more of the following conditions as the PDU set allowed to use the scheduling grant:
highest order modulation and coding MCS level allowed to be used included in the mapping restriction information corresponding to the PDU set is higher than or equal to an MCS level corresponding to the scheduling grant;
a list of configuration grant CGs allowed to be used included in the mapping restriction information corresponding to the PDU set includes a CG index corresponding to the scheduling grant;
configuration grant type allowed to be used included in the mapping restriction information corresponding to the PDU set is the same as a CG type of the scheduling grant;
maximum PSSCH duration allowed to be used included in the mapping restriction information corresponding to the PDU set is greater than or equal to a PSSCH duration corresponding to the scheduling grant;
a list of subcarrier spacing (SCSs) allowed to be used included in the mapping restriction information corresponding to the PDU set includes an SCS corresponding to the scheduled grant;
maximum SCS allowed to be used included in the mapping restriction information corresponding to the PDU set is greater than or equal to an SCS corresponding to the scheduling grant.

Optionally, the third processing unit 703 is specifically used to:
for Uu interface between the user equipment and the network device, based on the mapping restriction information corresponding to the logical channel, determine a logical channel that satisfies one or more of the following conditions as the logical channel allowed to use the scheduling grant:
highest order modulation and coding MCS level allowed to be used included in the mapping restriction information corresponding to the logical channel is higher than or equal to an MCS level corresponding to the scheduling grant;
a list of configuration grant CGs allowed to be used included in the mapping restriction information corresponding to the logical channel includes a CG index corresponding to the scheduling grant;
configuration grant type allowed to be used included in the mapping restriction information corresponding to the logical channel is the same as a CG type of the scheduling grant;
maximum PUSCH duration allowed to be used included in the mapping restriction information corresponding to the logical channel is greater than or equal to a PUSCH duration corresponding to the scheduling grant;
a list of cells allowed to be used included in the mapping restriction information corresponding to the logical channel includes a cell corresponding to the scheduling grant;
carrier type allowed to be used included in the mapping restriction information corresponding to the logical channel is the same as a carrier type corresponding to the scheduling grant;
a list of subcarrier spacing (SCSs) allowed to be used included in the mapping restriction information corresponding to the logical channel includes an SCS corresponding to the scheduled grant;
maximum SCS allowed to be used included in the mapping restriction information corresponding to the logical channel is greater than or equal to an SCS corresponding to the scheduling grant.

Optionally, the third processing unit 703 is specifically used to:
for the sidelink interface between UEs, based on the mapping restriction information corresponding to the logical channel, determine a logical channel that satisfies one or more of the following conditions as the logical channel allowed to use the scheduling grant:
highest order modulation and coding MCS level allowed to be used included in the mapping restriction information corresponding to the logical channel is higher than or equal to an MCS level corresponding to the scheduling grant;
a list of configuration grant CGs allowed to be used included in the mapping restriction information corresponding to the logical channel includes a CG index corresponding to the scheduling grant;
configuration grant type allowed to be used included in the mapping restriction information corresponding to the logical channel is the same as a CG type of the scheduling grant;
maximum PSSCH duration allowed to be used included in the mapping restriction information corresponding to the logical channel is greater than or equal to a PSSCH duration corresponding to the scheduling grant;
a list of subcarrier spacing (SCSs) allowed to be used included in the mapping restriction information corresponding to the logical channel includes an SCS corresponding to the scheduled grant;
maximum SCS allowed to be used included in the mapping restriction information corresponding to the logical channel is greater than or equal to an SCS corresponding to the scheduling grant.

Optionally, the information processing device in the embodiment of the present disclosure further includes:
a first resource allocation unit used to perform resource allocation based on the PDU set allowed to use the scheduling grant.

Optionally, the first resource allocation unit is specifically used to:
perform a first round of resource allocation for a first PDU set, where the first PDU set is a PDU whose remaining delay budget is lower than a first threshold, in the PDU set that allowed to use the scheduling grant.

Optionally, the first resource allocation unit is specifically used to:
in case that there are multiple first PDU sets, perform resource allocation for each of the first PDU sets in the multiple first PDU sets in descending order of priorities of multiple first PDU sets.

Optionally, the first resource allocation unit is specifically used to:
if there are remaining resources after the first round of resource allocation, perform a second round of resource allocation for PDU sets requiring resources among the PDU sets allowed to use the scheduling grant, excluding the first PDU set, in descending order of priorities of the PDU sets, until resources are exhausted or all PDU sets have been allocated resources;
   or,
if there are remaining resources after the first round of resource allocation, in descending order of priorities of the PDU sets, performing a second round of resource allocation for remaining PDU sets among the PDU sets allowed to use the scheduling grant, excluding the first PDU set, according to PBRs corresponding to the PDU sets;
if there are remaining resources after the second round of resource allocation, in descending order of priorities of the PDU sets, perform resource allocation for remaining data of PDU sets other than the first PDU set in the PDU sets allowed to use the scheduling grant, until the resource is exhausted or all PDU sets have been allocated resources.

Optionally, the first resource allocation unit is specifically used to:
perform a first round of resource allocation for PDU sets requiring resources among the PDU sets allowed to use the scheduling grant, in descending order of priorities of the PDU sets; or,
in descending order of priorities of the PDU sets, perform a first round of resource allocation for the PDU sets allowed to use the scheduling grant, based on PBR of each PDU set;
if there are remaining resources after the first round of resource allocation, in descending order of priorities of the PDU sets, perform resource allocation for remaining data of PDU sets allowed to use the scheduling grant, until the resource is exhausted or all PDU sets have been allocated resources.

Optionally, the information processing device in the embodiment of the disclosure further includes:
a second resource allocation unit used to perform resource allocation based on logical channels allowed to use the scheduling grant.

Optionally, the second resource allocation unit is specifically used to:
perform resource allocation for a first PDU set, where the first PDU set is a PDU set whose remaining delay budget is lower than a first threshold, in the PDU sets allowed to use the scheduling grant;
if there are remaining resources after performing resource allocation for the first PDU set, in descending order of priorities of logical channels, perform a first round of resource allocation or each logical channel allowed to use the scheduling grant according to PBR of the logical channel;
if there are remaining resources after performing the first round of resource allocation for each logical channel allowed to use the scheduling grant, in descending order of priorities of logical channels, perform resource allocation for remaining data in each logical channel allowed to use the scheduling grant, until the resources are exhausted or all data in each logical channel allowed to use the scheduling grant has been allocated resources.

Optionally, the second resource allocation unit is specifically used to:
in descending order of priorities of logical channels, perform a first round of resource allocation for each logical channel allowed to use the scheduling grant, according to PBRs of the logical channels;
if there are remaining resources after performing the first round of resource allocation for each logical channel allowed to use the scheduling grant, in descending order of priorities of logical channels, perform resource allocation for remaining data in each logical channel allowed to use the scheduling grant, until the resources are exhausted or all data in each logical channel allowed to use the scheduling grant have been allocated resources.

According to the information processing device in the embodiment of the present disclosure, by determining the mapping restriction information corresponding to the set PDU set; in case of receiving a scheduling grant, determining a PDU set allowed to use the scheduling grant based on the mapping restriction information corresponding to the PDU set; or, determining mapping restriction information corresponding to logical channels to which the PDU set belongs based on the mapping restriction information corresponding to the PDU set; in case of receiving the scheduling grant, determining a logical channel allowed to use the scheduling grant based on the mapping restriction information corresponding to the logical channels. In this way, the subsequent resource allocation for the PDU set can be realized on this basis, and the QoS of the PDU set can be guaranteed, thereby enhancing user experience of the XR service.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

One embodiment of the present disclosure further provides a processor-readable storage medium, which includes program instructions stored thereon. The computer program is used to cause a processor to perform:
determining mapping restriction information corresponding to a protocol data unit (PDU) set;
in case of receiving a scheduling grant, determining a PDU set allowed to use the scheduling grant based on the mapping restriction information corresponding to the PDU set; or,
determining mapping restriction information corresponding to logical channels to which the PDU set belongs based on the mapping restriction information corresponding to the PDU set; in case of receiving the scheduling grant, determining a logical channel allowed to use the scheduling grant based on the mapping restriction information corresponding to the logical channels.

When the program instructions are executed by the processor, all implementation methods of the method embodiment applied to the UE side as shown in FIG. 4 can be implemented, which will not be described here to avoid repetition.

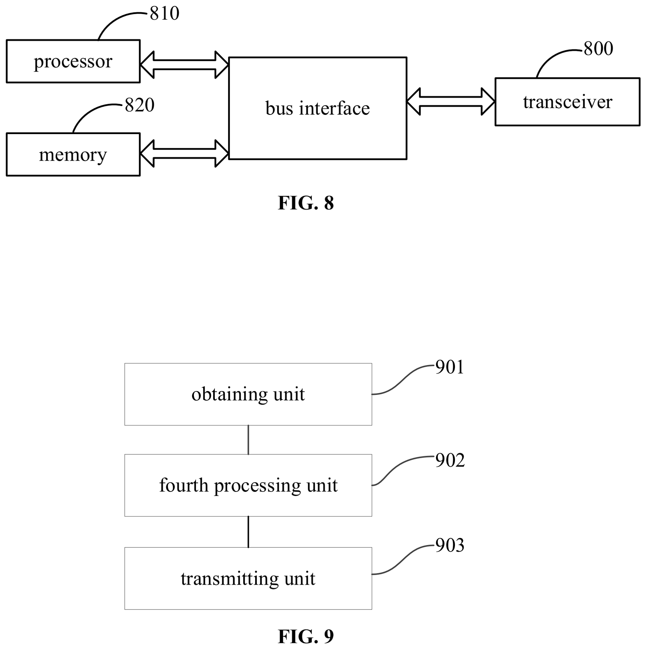

As shown in FIG. 8, one embodiment of the present disclosure further provides a network device, including a memory820, a transceiver 800, and a processor 810. The memory 820 is used to store program instructions. The transceiver 800 is used to send and receive data under the control of the processor 810. The processor 810 is used to read the program instructions in the memory 820 and performing the following operations:
obtaining assistance information;
generating configuration information based on the assistance information, where the configuration information includes mapping restriction information corresponding to the PDU set;
sending the configuration information to the UE.

In FIG. 8, a bus architecture may include any number of interconnected bus and bridge. Specifically, various circuits of one or more processors, which are represented by the processor 810, and one or more memories, which are represented by the memory 820, are linked together. The bus architecture may link various other circuits, such as a peripheral device, voltage regulator and a power management circuit together. These features are well known in this field; therefore, the present disclosure does not make further description on these features. The bus interface provides an interface. The transceiver 800 may be multiple elements, including a transmitter and a receiver and provide units, which communicate with other devices on the transmission medium. The transmission medium includes transmission media such as wireless channels, wired channels, and optical cables. The processor 810 is responsible for managing the bus architecture and the normal processing. The memory 820 may be used to store data used by the processor 810 for performing operations.

The processor 810 may be a central processing unit (CPU), an application specific integrated circuit (ASIC), a field-programmable gate array (FPGA) or a complex programmable logic device (CPLD). The processor may also adopt multi-core architecture.

Optionally, the assistance information includes one or more of the following:
a full set of QoS parameters corresponding to one QoS profile or each PDU set within one QoS flow in UE Uu interface;
a subset of QoS parameters corresponding to one QoS profile or a PDU set within one QoS flow in UE Uu interface;
a full set of QoS parameters corresponding to one QoS profile or a PDU set that may appear within one QoS flow in UE Uu interface;
a subset of QoS parameters corresponding to one QoS profile or a PDU set that may appear within one QoS flow in UE Uu interface.

Optionally, the processor 810 is also used to:
receive assistance information reported by UE;
or, receive assistance information from a core network device.

Optionally, the processor 810 is also used to:
in case that the UE is in an RRC connected state, send a special RRC signaling to the UE, where the special RRC signaling includes the configuration information;
in case that the UE is in an RRC idle state or an RRC inactive state, send system information to the UE, where the system information includes the configuration information.

Optionally, for the Uu interface between the UE and the network device, the mapping restriction information includes one or a combination of the following:
highest order modulation and coding MCS level allowed to be used;
a list of configuration grants (CGs) allowed to be used, where the CG list includes one or more CG indexes;
whether allow to use configuration grant type 1 (type 1 CG);
whether allow to use configuration grant type 2 (type 2 CG);
maximum physical uplink shared channel duration (PUSCH duration) allowed to be used;
a list of cells allowed to be used;
carrier type allowed to be used;
a list of subcarrier spacing (SCSs) allowed to be used;
maximum SCSs allowed to be used.

Optionally, for a sidelink interface between UEs, the mapping restriction information includes one or a combination of the following:
highest order modulation coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical sidelink shared channel (PSSCH) duration allowed to be used;
list of subcarrier spacing (SCSs) allowed to be used;
maximum SCSs allowed to be used.

According to the network device in the embodiment of the present disclosure, through obtaining assistance information, then generating configuration information based on the assistance information, where the configuration information includes mapping restriction information corresponding to the PDU set, and finally sending the configuration information to the UE, the UE determines the PDU set or logical channel allowed to use the scheduling grant, so that the subsequent UE's resource allocation for the PDU set can be realized, thereby guarantying QoS of the PDU set and improving user experience of XR services.

As shown in FIG. 9, one embodiment of the present disclosure further provides an information transmission device, including:
an obtaining unit 901 used to obtain assistance information;
a fourth processing unit 902 used to generate configuration information based on the assistance information, where the configuration information includes mapping restriction information corresponding to the PDU set;
a transmitting unit 903 used to send the configuration information to the UE.

Optionally, the assistance information includes one or more of the following:
a full set of QoS parameters corresponding to one QoS profile or each PDU set within one QoS flow in UE Uu interface;
a subset of QoS parameters corresponding to one QoS profile or a PDU set within one QoS flow in UE Uu interface;
a full set of QoS parameters corresponding to one QoS profile or a PDU set that may appear within one QoS flow in UE Uu interface;
a subset of QoS parameters corresponding to one QoS profile or a PDU set that may appear within one QoS flow in UE Uu interface.

Optionally, the obtaining unit 901 is also used to:
receive assistance information reported by UE;
or, receive assistance information from a core network device.
Optionally, the transmitting unit 903 is specifically used to:
in case that the UE is in an RRC connected state, send a special RRC signaling to the UE, where the special RRC signaling includes the configuration information;
in case that the UE is in an RRC idle state or an RRC inactive state, send system information to the UE, where the system information includes the configuration information.

Optionally, for the Uu interface between the UE and the network device, the mapping restriction information includes one or a combination of the following:
highest order modulation and coding MCS level allowed to be used;
a list of configuration grants (CGs) allowed to be used, where the CG list includes one or more CG indexes;
whether allow to use configuration grant type 1 (type 1 CG);
whether allow to use configuration grant type 2 (type 2 CG);
maximum physical uplink shared channel duration (PUSCH duration) allowed to be used;
a list of cells allowed to be used;
carrier type allowed to be used;
a list of subcarrier spacing (SCSs) allowed to be used;
maximum SCSs allowed to be used.

Optionally, for a sidelink interface between UEs, the mapping restriction information includes one or a combination of the following:
highest order modulation coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical sidelink shared channel (PSSCH) duration allowed to be used;
list of subcarrier spacing (SCSs) allowed to be used;
maximum SCSs allowed to be used.

According to the information transmission device in the embodiment of the present disclosure, through obtaining assistance information, then generating configuration information based on the assistance information, where the configuration information includes mapping restriction information corresponding to the PDU set, and finally sending the configuration information to the UE, the UE determines the PDU set or logical channel allowed to use the scheduling grant, so that the subsequent UE's resource allocation for the PDU set can be realized, thereby guarantying QoS of the PDU set and improving user experience of XR services.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

One embodiment of the present disclosure further provides a processor-readable storage medium, which includes program instructions stored thereon. The computer program is used to cause a processor to perform:
obtaining assistance information;
generating configuration information based on the assistance information, where the configuration information includes mapping restriction information corresponding to the PDU set;
sending the configuration information to the UE.

When the program instructions are executed by the processor, all implementation methods of the method embodiment applied to the network side as shown in FIG. 5 can be implemented, which will not be described here to avoid repetition.

The technical solutions provided in the embodiments of the present disclosure may be applicable to various systems, especially the fifth generation communication (5G) system. For example, applicable systems may be global system of mobile communication (GSM) system, code division multiple access (CDMA) system, wideband code division multiple access (WCDMA) general packet wireless service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. Each of the various systems includes a user equipment and a network device. The system may further include a core network part, such as an evolved packet system (EPS), a 5G system (5GS).

Terminal devices involved in the embodiments of the present disclosure may be a device that provides voice and/or data connectivity to a user, a handheld device with a wireless connection function, or other processing device coupled to a wireless modem. In different systems, names of terminal devices may be different. For example, in the 5G system, the terminal device may be referred as user equipment (UE). A wireless terminal device may communicate with one or more core networks (CN) via a radio access network (RAN). The wireless terminal device may be a mobile terminal device such as a mobile phone (or referred as cell phone), or a computer with a mobile terminal device, such as a portable, pocket-sized, handheld, computer built-in or vehicle-mounted mobile device, which exchange language and/or data with wireless access networks, for example, a personal communication service (PCS) phone, a cordless phone, a session initiated protocol (SIP) phone, a wireless local loop (WLL) station, a personal digital assistant (PDA) and other device. The wireless terminal device may also be referred to as system, subscriber unit, subscriber station, mobile station, mobile, remote station, access point, remote terminal, access terminal, user terminal, user agent, or user device, which are not limited in the embodiments of the present disclosure.

The network device involved in the embodiments of the present disclosure may be a base station, and the base station may include a plurality of cells for providing services for the terminal. According to different specific application scenarios, the base station may also be referred as an access point, or the base station may be a device in an access network that communicates with wireless terminal devices through one or more sectors on air interfaces, or other names. The network device may be used to exchange received frames with internet protocol (IP) packets, and act as a router between the wireless terminal device and the rest of the access network, where the rest of the access network may include an internet protocol (IP) communication network. The network device may also coordinate attribute management for air interfaces. For example, the network device involved in the embodiments of the present disclosure may be a base transceiver station (BTS) in global system for mobile communications (GSM) or code division multiple access (CDMA), a NodeB in wide-band code division multiple access (WCDMA), an evolutional Node B (eNB or e-NodeB) in long term evolution (LTE) system, a 5G base station (gNB) in the 5G network architecture (next generation system), a home evolved Node B (HeNB), a relay node, a femto, or a pico, which are not limited in the embodiments of the present disclosure. In some network structures, the network device may include a centralized unit (CU) node and a distributed unit (DU) node; and the centralized unit and the distributed unit may also be geographically separated.

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing apparatus to create a machine, so that instructions executable by the processor of the computer or the other programmable data processing apparatus may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. An information processing method applied to a user equipment (UE), comprising:
determining mapping restriction information corresponding to a protocol data unit (PDU) set;
in case of receiving a scheduling grant, determining a PDU set allowed to use the scheduling grant based on the mapping restriction information corresponding to the PDU set; or,
determining mapping restriction information corresponding to logical channels to which the PDU set belongs based on the mapping restriction information corresponding to the PDU set; in case of receiving the scheduling grant, determining a logical channel allowed to use the scheduling grant based on the mapping restriction information corresponding to the logical channels.

2. The method according to claim 1, wherein the determining mapping restriction information corresponding to a PDU set, includes:
receiving configuration information sent by a network device; wherein the configuration information includes the mapping restriction information corresponding to the PDU set;
or, when the user equipment is offline, determining the mapping restriction information corresponding to the PDU set based on preconfigured information.

3. The method according to claim 2, wherein the receiving configuration information sent by a network device, includes:
in case that the user equipment is in an RRC connected state, receiving the configuration information sent by the network device through a dedicated RRC signaling;
in case that the user equipment is in an RRC idle state or RRC inactive state, receiving the configuration information sent by the network device through system information.

4. The method according to claim 1, wherein the determining mapping restriction information corresponding to logical channels to which the PDU set belongs based on the mapping restriction information corresponding to the PDU set, includes one of the following:
determining mapping restriction information corresponding to the PDU set in a current buffer of the logical channel to which the PDU set belongs, which is earliest arrived, or has a highest priority, or has a smallest remaining delay budget, as the mapping restriction information corresponding to the logical channel to which the PDU set belongs;
determining an intersection set of mapping restriction information corresponding to earliest arrived N PDU sets, or N PDU sets of highest priority, or N PDU sets with the smallest remaining delay budget, in a current buffer of the logical channel to which the PDU set belongs, as the mapping restriction information corresponding to the logical channel to which the PDU set belongs, wherein N is an integer greater than 1;
determining an intersection set of mapping restriction information corresponding to a logical channel of the user equipment and mapping restriction information corresponding to the PDU set in a current buffer of the logical channel to which the PDU set belongs, which is earliest arrived, or has a highest priority, or has a smallest remaining delay budget, as the mapping restriction information corresponding to the logical channel to which the PDU set belongs;
determining an intersection set of mapping restriction information corresponding to a logical channel of the user equipment and mapping restriction information corresponding to earliest arrived N PDU sets, or N PDU sets of highest priority, or N PDU sets with the smallest remaining delay budget, in a current buffer of the logical channel to which the PDU set belongs, as the mapping restriction information corresponding to the logical channel to which the PDU set belongs, wherein N is an integer greater than 1.

5. The method according to claim 1, wherein for a Uu interface between the user equipment and the network device, the mapping restriction information includes one or a combination of the following:
highest order modulation and coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical uplink shared channel (PUSCH) duration allowed to be used;
a list of cells allowed to be used;
carrier type allowed to be used;
a list of subcarrier spacing (SCSs) allowed to be used;
maximum SCS allowed to be used.

6. The method according to claim 1, wherein for a sidelink interface between UEs, the mapping restriction information includes one or a combination of the following:
highest order modulation and coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical sidelink shared channel (PSSCH) duration allowed to be used;
list of cells allowed to be used;
carrier type allowed to be used;
list of subcarrier spacing (SCSs) allowed to be used;
maximum SCSs allowed to be used.

7. The method according to claim 1, wherein the determining a PDU set allowed to use the scheduling grant based on the mapping restriction information corresponding to the PDU set, includes:
for Uu interface between the user equipment and the network device, based on the mapping restriction information corresponding to the PDU set, determining a PDU set that satisfies one or more of the following conditions as the PDU set allowed to use the scheduling grant:
highest order modulation and coding MCS level allowed to be used included in the mapping restriction information corresponding to the PDU set is higher than or equal to an MCS level corresponding to the scheduling grant;
a list of configuration grant CGs allowed to be used included in the mapping restriction information corresponding to the PDU set includes a CG index corresponding to the scheduling grant;
configuration grant type allowed to be used included in the mapping restriction information corresponding to the PDU set is the same as a CG type of the scheduling grant;
maximum PUSCH duration allowed to be used included in the mapping restriction information corresponding to the PDU set is greater than or equal to a PUSCH duration corresponding to the scheduling grant;
a list of cells allowed to be used included in the mapping restriction information corresponding to the PDU set includes a cell corresponding to the scheduling grant;
carrier type allowed to be used included in the mapping restriction information corresponding to the PDU set is the same as a carrier type corresponding to the scheduling grant;
a list of subcarrier spacing (SCSs) allowed to be used included in the mapping restriction information corresponding to the PDU set includes an SCS corresponding to the scheduled grant;
maximum SCS allowed to be used included in the mapping restriction information corresponding to the PDU set is greater than or equal to an SCS corresponding to the scheduling grant.

8. The method according to claim 1, wherein the determining a PDU set allowed to use the scheduling grant based on the mapping restriction information corresponding to the PDU set, includes:
for a sidelink interface between UEs, based on the mapping restriction information corresponding to the PDU set, determining a PDU set that satisfies one or more of the following conditions as the PDU set allowed to use the scheduling grant:
highest order modulation and coding MCS level allowed to be used included in the mapping restriction information corresponding to the PDU set is higher than or equal to an MCS level corresponding to the scheduling grant;
a list of configuration grant CGs allowed to be used included in the mapping restriction information corresponding to the PDU set includes a CG index corresponding to the scheduling grant;
configuration grant type allowed to be used included in the mapping restriction information corresponding to the PDU set is the same as a CG type of the scheduling grant;
maximum PSSCH duration allowed to be used included in the mapping restriction information corresponding to the PDU set is greater than or equal to a PSSCH duration corresponding to the scheduling grant;
a list of subcarrier spacing (SCSs) allowed to be used included in the mapping restriction information corresponding to the PDU set includes an SCS corresponding to the scheduled grant;
maximum SCS allowed to be used included in the mapping restriction information corresponding to the PDU set is greater than or equal to an SCS corresponding to the scheduling grant.

9. The method according to claim 1, wherein the determining a logical channel allowed to use the scheduling grant based on the mapping restriction information corresponding to the logical channels, includes:
for Uu interface between the user equipment and the network device, based on the mapping restriction information corresponding to the logical channel, determining a logical channel that satisfies one or more of the following conditions as the logical channel allowed to use the scheduling grant:
highest order modulation and coding MCS level allowed to be used included in the mapping restriction information corresponding to the logical channel is higher than or equal to an MCS level corresponding to the scheduling grant;
a list of configuration grant CGs allowed to be used included in the mapping restriction information corresponding to the logical channel includes a CG index corresponding to the scheduling grant;
configuration grant type allowed to be used included in the mapping restriction information corresponding to the logical channel is the same as a CG type of the scheduling grant;
maximum PUSCH duration allowed to be used included in the mapping restriction information corresponding to the logical channel is greater than or equal to a PUSCH duration corresponding to the scheduling grant;
a list of cells allowed to be used included in the mapping restriction information corresponding to the logical channel includes a cell corresponding to the scheduling grant;
carrier type allowed to be used included in the mapping restriction information corresponding to the logical channel is the same as a carrier type corresponding to the scheduling grant;
a list of subcarrier spacing (SCSs) allowed to be used included in the mapping restriction information corresponding to the logical channel includes an SCS corresponding to the scheduled grant;
maximum SCS allowed to be used included in the mapping restriction information corresponding to the logical channel is greater than or equal to an SCS corresponding to the scheduling grant.

10. The method according to claim 1, wherein the determining a logical channel allowed to use the scheduling grant based on the mapping restriction information corresponding to the logical channels, includes:
for a sidelink interface between UEs, based on the mapping restriction information corresponding to the logical channel, determining a logical channel that satisfies one or more of the following conditions as the logical channel allowed to use the scheduling grant:
highest order modulation and coding MCS level allowed to be used included in the mapping restriction information corresponding to the logical channel is higher than or equal to an MCS level corresponding to the scheduling grant;
a list of configuration grant CGs allowed to be used included in the mapping restriction information corresponding to the logical channel includes a CG index corresponding to the scheduling grant;
configuration grant type allowed to be used included in the mapping restriction information corresponding to the logical channel is the same as a CG type of the scheduling grant;
maximum PSSCH duration allowed to be used included in the mapping restriction information corresponding to the logical channel is greater than or equal to a PSSCH duration corresponding to the scheduling grant;
a list of subcarrier spacing (SCSs) allowed to be used included in the mapping restriction information corresponding to the logical channel includes an SCS corresponding to the scheduled grant;
maximum SCS allowed to be used included in the mapping restriction information corresponding to the logical channel is greater than or equal to an SCS corresponding to the scheduling grant.

11. The method according to claim 1, wherein after determining a PDU set allowed to use the scheduling grant based on the mapping restriction information corresponding to the PDU set, the method further includes:
performing resource allocation based on the PDU set that allowed to use the scheduling grant.

12. The method according to claim 11, wherein the performing resource allocation based on the PDU set that allowed to use the scheduling grant, includes:
performing a first round of resource allocation for a first PDU set, wherein the first PDU set is a PDU whose remaining delay budget is lower than a first threshold, in the PDU set that allowed to use the scheduling grant.

13. The method according to claim 12, wherein the performing a first round of resource allocation for a first PDU set, includes:
in case that there are multiple first PDU sets, performing resource allocation for each of the first PDU sets in the multiple first PDU sets in descending order of priorities of the multiple first PDU sets.

14. The method according to claim 12 or 13, wherein the method further includes:
if there are remaining resources after the first round of resource allocation, performing a second round of resource allocation for PDU sets requiring resources among the PDU sets allowed to use the scheduling grant, excluding the first PDU set, in descending order of priorities of the PDU sets, until resources are exhausted or all PDU sets have been allocated resources;
or,
if there are remaining resources after the first round of resource allocation, in descending order of priorities of the PDU sets, performing a second round of resource allocation for remaining PDU sets among the PDU sets allowed to use the scheduling grant, excluding the first PDU set, according to PBRs corresponding to the PDU sets;
if there are remaining resources after the second round of resource allocation, in descending order of priorities of the PDU sets, performing resource allocation for remaining data of PDU sets other than the first PDU set in the PDU sets allowed to use the scheduling grant, until the resource is exhausted or all PDU sets have been allocated resources.

15. The method according to claim 11, wherein the performing resource allocation based on the PDU set that allowed to use the scheduling grant, includes:
performing a first round of resource allocation for PDU sets requiring resources among the PDU sets allowed to use the scheduling grant, in descending order of priorities of the PDU sets; or,
in descending order of priorities of the PDU sets, performing a first round of resource allocation for the PDU sets allowed to use the scheduling grant, based on PBR of each PDU set;
if there are remaining resources after the first round of resource allocation, in descending order of priorities of the PDU sets, performing resource allocation for remaining data of the PDU sets allowed to use the scheduling grant, until the resource is exhausted or all PDU sets have been allocated resources.

16. The method according to claim 1, wherein after determining a logical channel allowed to use the scheduling grant based on the mapping restriction information corresponding to the logical channels, the method further includes:
performing resource allocation based on logical channels allowed to use the scheduling grant.

17. The method according to claim 16, wherein the performing resource allocation based on logical channels allowed to use the scheduling grant, includes:
performing resource allocation for a first PDU set, wherein the first PDU set is a PDU set whose remaining delay budget is lower than a first threshold, in the PDU sets allowed to use the scheduling grant;
if there are remaining resources after performing resource allocation for the first PDU set, in descending order of priorities of logical channels, performing a first round of resource allocation or each logical channel allowed to use the scheduling grant according to PBR of the logical channel;
if there are remaining resources after performing the first round of resource allocation for each logical channel allowed to use the scheduling grant, in descending order of priorities of logical channels, performing resource allocation for remaining data in each logical channel allowed to use the scheduling grant, until the resources are exhausted or all data in each logical channel allowed to use the scheduling grant has been allocated resources.

18. The method according to claim 16, wherein the performing resource allocation based on logical channels allowed to use the scheduling grant, includes:
in descending order of priorities of logical channels, performing a first round of resource allocation for each logical channel allowed to use the scheduling grant, according PBRs of the logical channels;
if there are remaining resources after performing the first round of resource allocation for each logical channel allowed to use the scheduling grant, in descending order of priorities of logical channels, performing resource allocation for remaining data in each logical channel allowed to use the scheduling grant, until the resources are exhausted or all data in each logical channel allowed to use the scheduling grant have been allocated resources.

19. An information transmission method applied to a network device, comprising:
obtaining assistance information;
generating configuration information based on the assistance information, wherein the configuration information includes mapping restriction information corresponding to the PDU set; and
sending the configuration information to a user equipment (UE).

20. The method according to claim 19, wherein the assistance information includes one or more of the following:
a full set of QoS parameters corresponding to one QoS profile or each PDU set within one QoS flow in UE Uu interface;
a subset of QoS parameters corresponding to one QoS profile or a PDU set within one QoS flow in UE Uu interface;
a full set of QoS parameters corresponding to one QoS profile or a PDU set that may appear within one QoS flow in UE Uu interface;
a subset of QoS parameters corresponding to one QoS profile or a PDU set that may appear within one QoS flow in UE Uu interface.

21. The method according to claim 19, wherein the obtaining assistance information, includes:
receiving the assistance information reported by the UE;
or, receiving the assistance information from a core network device.

22. The method according to claim 19, wherein the sending the configuration information to a user equipment (UE), includes:
in case that the UE is in an RRC connected state, sending a special RRC signaling to the UE, wherein the special RRC signaling includes the configuration information;
in case that the UE is in an RRC idle state or an RRC inactive state, sending system information to the UE, wherein the system information includes the configuration information.

23. The method according to claim 19, wherein for Uu interface between the UE and the network device, the mapping restriction information includes one or a combination of the following:
highest order modulation and coding MCS level allowed to be used;
a list of configuration grants (CGs) allowed to be used, where the CG list includes one or more CG indexes;
whether allow to use configuration grant type 1 (type 1 CG);
whether allow to use configuration grant type 2 (type 2 CG);
maximum physical uplink shared channel (PUSCH) duration allowed to be used;
a list of cells allowed to be used;
carrier type allowed to be used;
a list of subcarrier spacing (SCSs) allowed to be used;
maximum SCSs allowed to be used.

24. The method according to claim 19, wherein for a sidelink interface between UEs, the mapping restriction information includes one or a combination of the following:
highest order modulation coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical sidelink shared channel (PSSCH) duration allowed to be used;
list of subcarrier spacing (SCSs) allowed to be used;
maximum SCSs allowed to be used.

25. A user equipment (UE), comprising: a memory, a transceiver and a processor; wherein the memory is used to store program instructions; the transceiver is used to send and receive data under control of the processor; the processor is used to read the program instructions in the memory and perform the following operations:
determining mapping restriction information corresponding to a protocol data unit (PDU) set;
in case of receiving a scheduling grant, determining a PDU set allowed to use the scheduling grant based on the mapping restriction information corresponding to the PDU set; or,
determining mapping restriction information corresponding to logical channels to which the PDU set belongs based on the mapping restriction information corresponding to the PDU set; in case of receiving the scheduling grant, determining a logical channel allowed to use the scheduling grant based on the mapping restriction information corresponding to the logical channels.

26. The UE according to claim 25, wherein the processor is used to perform:
receiving configuration information sent by a network device; wherein the configuration information includes the mapping restriction information corresponding to the PDU set;
or, when the user equipment is offline, determining the mapping restriction information corresponding to the PDU set based on preconfigured information.

27. The UE according to claim 26, wherein the processor is used to perform:
in case that the user equipment is in an RRC connected state, receiving the configuration information sent by the network device through a dedicated RRC signaling;
in case that the user equipment is in an RRC idle state or RRC inactive state, receiving the configuration information sent by the network device through system information.

28. The UE according to claim 25, wherein the processor is used to perform:
determining mapping restriction information corresponding to the PDU set in a current buffer of the logical channel to which the PDU set belongs, which is earliest arrived, or has a highest priority, or has a smallest remaining delay budget, as the mapping restriction information corresponding to the logical channel to which the PDU set belongs; or,
determining an intersection set of mapping restriction information corresponding to earliest arrived N PDU sets, or N PDU sets of highest priority, or N PDU sets with the smallest remaining delay budget, in a current buffer of the logical channel to which the PDU set belongs, as the mapping restriction information corresponding to the logical channel to which the PDU set belongs, wherein N is an integer greater than 1; or,
determining an intersection set of mapping restriction information corresponding to a logical channel of the user equipment and mapping restriction information corresponding to the PDU set in a current buffer of the logical channel to which the PDU set belongs, which is earliest arrived, or has a highest priority, or has a smallest remaining delay budget, as the mapping restriction information corresponding to the logical channel to which the PDU set belongs; or,
determining an intersection set of mapping restriction information corresponding to a logical channel of the user equipment and mapping restriction information corresponding to earliest arrived N PDU sets, or N PDU sets of highest priority, or N PDU sets with the smallest remaining delay budget, in a current buffer of the logical channel to which the PDU set belongs, as the mapping restriction information corresponding to the logical channel to which the PDU set belongs, wherein N is an integer greater than 1.

29. The UE according to claim 25, wherein for a Uu interface between the user equipment and the network device, the mapping restriction information includes one or a combination of the following:
highest order modulation and coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical uplink shared channel (PUSCH) duration allowed to be used;
a list of cells allowed to be used;
carrier type allowed to be used;
a list of subcarrier spacing (SCSs) allowed to be used;
maximum SCS allowed to be used.

30. The UE according to claim 25, wherein for a sidelink interface between UEs, the mapping restriction information includes one or a combination of the following:
highest order modulation and coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical sidelink shared channel (PSSCH) duration allowed to be used;
list of cells allowed to be used;
carrier type allowed to be used;
list of subcarrier spacing (SCSs) allowed to be used;
maximum SCSs allowed to be used.

31. The UE according to claim 25, wherein the processor is used to perform:
for Uu interface between the user equipment and the network device, based on the mapping restriction information corresponding to the PDU set, determining a PDU set that satisfies one or more of the following conditions as the PDU set allowed to use the scheduling grant:
highest order modulation and coding MCS level allowed to be used included in the mapping restriction information corresponding to the PDU set is higher than or equal to an MCS level corresponding to the scheduling grant;
a list of configuration grant CGs allowed to be used included in the mapping restriction information corresponding to the PDU set includes a CG index corresponding to the scheduling grant;
configuration grant type allowed to be used included in the mapping restriction information corresponding to the PDU set is the same as a CG type of the scheduling grant;
maximum PUSCH duration allowed to be used included in the mapping restriction information corresponding to the PDU set is greater than or equal to a PUSCH duration corresponding to the scheduling grant;
a list of cells allowed to be used included in the mapping restriction information corresponding to the PDU set includes a cell corresponding to the scheduling grant;
carrier type allowed to be used included in the mapping restriction information corresponding to the PDU set is the same as a carrier type corresponding to the scheduling grant;
a list of subcarrier spacing (SCSs) allowed to be used included in the mapping restriction information corresponding to the PDU set includes an SCS corresponding to the scheduled grant;
maximum SCS allowed to be used included in the mapping restriction information corresponding to the PDU set is greater than or equal to an SCS corresponding to the scheduling grant.

32. The UE according to claim 25, wherein the processor is used to perform:
for a sidelink interface between UEs, based on the mapping restriction information corresponding to the PDU set, determining a PDU set that satisfies one or more of the following conditions as the PDU set allowed to use the scheduling grant:
highest order modulation and coding MCS level allowed to be used included in the mapping restriction information corresponding to the PDU set is higher than or equal to an MCS level corresponding to the scheduling grant;
a list of configuration grant CGs allowed to be used included in the mapping restriction information corresponding to the PDU set includes a CG index corresponding to the scheduling grant;
configuration grant type allowed to be used included in the mapping restriction information corresponding to the PDU set is the same as a CG type of the scheduling grant;
maximum PSSCH duration allowed to be used included in the mapping restriction information corresponding to the PDU set is greater than or equal to a PSSCH duration corresponding to the scheduling grant;
a list of subcarrier spacing (SCSs) allowed to be used included in the mapping restriction information corresponding to the PDU set includes an SCS corresponding to the scheduled grant;
maximum SCS allowed to be used included in the mapping restriction information corresponding to the PDU set is greater than or equal to an SCS corresponding to the scheduling grant.

33. The UE according to claim 25, wherein the processor is used to perform:
for Uu interface between the user equipment and the network device, based on the mapping restriction information corresponding to the logical channel, determining a logical channel that satisfies one or more of the following conditions as the logical channel allowed to use the scheduling grant:
highest order modulation and coding MCS level allowed to be used included in the mapping restriction information corresponding to the logical channel is higher than or equal to an MCS level corresponding to the scheduling grant;
a list of configuration grant CGs allowed to be used included in the mapping restriction information corresponding to the logical channel includes a CG index corresponding to the scheduling grant;
configuration grant type allowed to be used included in the mapping restriction information corresponding to the logical channel is the same as a CG type of the scheduling grant;
maximum PUSCH duration allowed to be used included in the mapping restriction information corresponding to the logical channel is greater than or equal to a PUSCH duration corresponding to the scheduling grant;
a list of cells allowed to be used included in the mapping restriction information corresponding to the logical channel includes a cell corresponding to the scheduling grant;
carrier type allowed to be used included in the mapping restriction information corresponding to the logical channel is the same as a carrier type corresponding to the scheduling grant;
a list of subcarrier spacing (SCSs) allowed to be used included in the mapping restriction information corresponding to the logical channel includes an SCS corresponding to the scheduled grant;
maximum SCS allowed to be used included in the mapping restriction information corresponding to the logical channel is greater than or equal to an SCS corresponding to the scheduling grant.

34. The UE according to claim 25, wherein the processor is used to perform:
for a sidelink interface between UEs, based on the mapping restriction information corresponding to the logical channel, determining a logical channel that satisfies one or more of the following conditions as the logical channel allowed to use the scheduling grant:
highest order modulation and coding MCS level allowed to be used included in the mapping restriction information corresponding to the logical channel is higher than or equal to an MCS level corresponding to the scheduling grant;
a list of configuration grant CGs allowed to be used included in the mapping restriction information corresponding to the logical channel includes a CG index corresponding to the scheduling grant;
configuration grant type allowed to be used included in the mapping restriction information corresponding to the logical channel is the same as a CG type of the scheduling grant;
maximum PSSCH duration allowed to be used included in the mapping restriction information corresponding to the logical channel is greater than or equal to a PSSCH duration corresponding to the scheduling grant;
a list of subcarrier spacing (SCSs) allowed to be used included in the mapping restriction information corresponding to the logical channel includes an SCS corresponding to the scheduled grant;
maximum SCS allowed to be used included in the mapping restriction information corresponding to the logical channel is greater than or equal to an SCS corresponding to the scheduling grant.

35. The UE according to claim 25, wherein the processor is used to perform:
performing resource allocation based on the PDU set that allowed to use the scheduling grant.

36. The UE according to claim 35, wherein the processor is used to perform:
performing a first round of resource allocation for a first PDU set, wherein the first PDU set is a PDU whose remaining delay budget is lower than a first threshold, in the PDU set that allowed to use the scheduling grant.

37. The UE according to claim 36, wherein the processor is used to perform:
in case that there are multiple first PDU sets, performing resource allocation for each of the first PDU sets in the multiple first PDU sets in descending order of priorities of the multiple first PDU sets.

38. The UE according to claim 36 or 37, wherein the processor is used to perform:
if there are remaining resources after the first round of resource allocation, performing a second round of resource allocation for PDU sets requiring resources among the PDU sets allowed to use the scheduling grant, excluding the first PDU set, in descending order of priorities of the PDU sets, until resources are exhausted or all PDU sets have been allocated resources;
or,
if there are remaining resources after the first round of resource allocation, in descending order of priorities of the PDU sets, performing a second round of resource allocation for remaining PDU sets among the PDU sets allowed to use the scheduling grant, excluding the first PDU set, according to PBRs corresponding to the PDU sets;
if there are remaining resources after the second round of resource allocation, in descending order of priorities of the PDU sets, performing resource allocation for remaining data of PDU sets other than the first PDU set in the PDU sets allowed to use the scheduling grant, until the resource is exhausted or all PDU sets have been allocated resources.

39. The UE according to claim 35, wherein the processor is used to perform:
performing a first round of resource allocation for PDU sets requiring resources among the PDU sets allowed to use the scheduling grant, in descending order of priorities of the PDU sets; or,
in descending order of priorities of the PDU sets, performing a first round of resource allocation for the PDU sets allowed to use the scheduling grant, based on PBR of each PDU set;
if there are remaining resources after the first round of resource allocation, in descending order of priorities of the PDU sets, performing resource allocation for remaining data of the PDU sets allowed to use the scheduling grant, until the resource is exhausted or all PDU sets have been allocated resources.

40. The UE according to claim 25, wherein the processor is used to perform:
performing resource allocation based on logical channels allowed to use the scheduling grant.

41. The UE according to claim 40, wherein the processor is used to perform:
performing resource allocation for a first PDU set, wherein the first PDU set is a PDU set whose remaining delay budget is lower than a first threshold, in the PDU sets allowed to use the scheduling grant;
if there are remaining resources after performing resource allocation for the first PDU set, in descending order of priorities of logical channels, performing a first round of resource allocation or each logical channel allowed to use the scheduling grant according to PBR of the logical channel;
if there are remaining resources after performing the first round of resource allocation for each logical channel allowed to use the scheduling grant, in descending order of priorities of logical channels, performing resource allocation for remaining data in each logical channel allowed to use the scheduling grant, until the resources are exhausted or all data in each logical channel allowed to use the scheduling grant has been allocated resources.

42. The UE according to claim 40, wherein the processor is used to perform:
in descending order of priorities of logical channels, performing a first round of resource allocation for each logical channel allowed to use the scheduling grant, according PBRs of the logical channels;
if there are remaining resources after performing the first round of resource allocation for each logical channel allowed to use the scheduling grant, in descending order of priorities of logical channels, performing resource allocation for remaining data in each logical channel allowed to use the scheduling grant, until the resources are exhausted or all data in each logical channel allowed to use the scheduling grant have been allocated resources.

43. An information processing device, comprising:
a first processing unit used to determine mapping restriction information corresponding to a protocol data unit (PDU) set;
a second processing unit used to, in case of receiving a scheduling grant, determine a PDU set allowed to use the scheduling grant based on the mapping restriction information corresponding to the PDU set; or,
a third processing unit used to determine mapping restriction information corresponding to logical channels to which the PDU set belongs based on the mapping restriction information corresponding to the PDU set; in case of receiving the scheduling grant, determining a logical channel allowed to use the scheduling grant based on the mapping restriction information corresponding to the logical channels.

44. A network device, comprising: a memory, a transceiver and a processor; wherein the memory is used to store program instructions; the transceiver is used to send and receive data under control of the processor; the processor is used to read the program instructions in the memory and perform the following operations:
obtaining assistance information;
generating configuration information based on the assistance information, where the configuration information includes mapping restriction information corresponding to the PDU set; and
sending the configuration information to a user equipment (UE).

45. The network device according to claim 44, wherein the assistance information includes one or more of the following:
a full set of QoS parameters corresponding to one QoS profile or each PDU set within one QoS flow in UE Uu interface;
a subset of QoS parameters corresponding to one QoS profile or a PDU set within one QoS flow in UE Uu interface;
a full set of QoS parameters corresponding to one QoS profile or a PDU set that may appear within one QoS flow in UE Uu interface;
a subset of QoS parameters corresponding to one QoS profile or a PDU set that may appear within one QoS flow in UE Uu interface.

46. The network device according to claim 44, wherein the processor is used to perform:
receiving the assistance information reported by the UE;
or, receiving the assistance information from a core network device.

47. The network device according to claim 44, wherein the processor is used to perform:
in case that the UE is in an RRC connected state, sending a special RRC signaling to the UE, wherein the special RRC signaling includes the configuration information;
in case that the UE is in an RRC idle state or an RRC inactive state, sending system information to the UE, wherein the system information includes the configuration information.

48. The network device according to claim 44, wherein for Uu interface between the UE and the network device, the mapping restriction information includes one or a combination of the following:
highest order modulation and coding MCS level allowed to be used;
a list of configuration grants (CGs) allowed to be used, where the CG list includes one or more CG indexes;
whether allow to use configuration grant type 1 (type 1 CG);
whether allow to use configuration grant type 2 (type 2 CG);
maximum physical uplink shared channel (PUSCH) duration allowed to be used;
a list of cells allowed to be used;
carrier type allowed to be used;
a list of subcarrier spacing (SCSs) allowed to be used;
maximum SCSs allowed to be used.

49. The network device according to claim 44, wherein for a sidelink interface between UEs, the mapping restriction information includes one or a combination of the following:
highest order modulation coding MCS level allowed to be used;
a list of configuration grant CGs allowed to be used, wherein the CG list includes one or more CG indexes;
whether allow to use configuration grant type 1 (type 1 CG);
whether allow to use configuration grant type 2 (type 2 CG);
maximum physical sidelink shared channel (PSSCH) duration allowed to be used;
list of subcarrier spacing (SCSs) allowed to be used;
maximum SCSs allowed to be used.

50. An information transmission device, comprising:
an obtaining unit used to obtain assistance information;
a fourth processing unit used to generate configuration information based on the assistance information, wherein the configuration information includes mapping restriction information corresponding to the PDU set; and
a transmitting unit used to send the configuration information to a user equipment (UE).

51. A processor-readable storage medium, comprising a computer program stored thereon; wherein the computer program is used to cause a processor to perform steps of the information processing method according to any one of claims 1 to 18 or to perform steps of the information transmission method according to any one of claims 19 to 24.
